(19) Europäisches Patentamt
European Patent Office
Office européen des brevets

(11) **EP 2 809 409 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(51) Int Cl.:
**B01D 1/22** *(2006.01)* **B01D 3/08** *(2006.01)*
**B01D 3/10** *(2006.01)*

(21) Anmeldenummer: **13706406.9**

(86) Internationale Anmeldenummer:
**PCT/CH2013/000019**

(22) Anmeldetag: **30.01.2013**

(87) Internationale Veröffentlichungsnummer:
**WO 2013/113131 (08.08.2013 Gazette 2013/32)**

(54) **VERFAHREN ZUR VERDAMPFUNG EINER FLÜSSIGKEIT UNTER VERMINDERTEM DRUCK**

PROCESS FOR VAPORIZING A LIQUID UNDER REDUCED PRESSURE

PROCÉDÉ POUR ÉVAPORER UN LIQUIDE SOUS PRESSION RÉDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2012 CH 148122012**

(43) Veröffentlichungstag der Anmeldung:
**10.12.2014 Patentblatt 2014/50**

(73) Patentinhaber: **Feichtinger, Heinrich**
**8132 Hinteregg (CH)**

(72) Erfinder: **Feichtinger, Heinrich**
**8132 Hinteregg (CH)**

(74) Vertreter: **Schaad, Balass, Menzl & Partner AG**
**Dufourstrasse 101**
**Postfach**
**8034 Zürich (CH)**

(56) Entgegenhaltungen:
**CH-A- 358 781          CH-A- 428 666**
**DE-A1- 10 024 418    DE-C- 401 444**
**US-A- 2 838 107        US-A1- 2006 231 378**

EP 2 809 409 B1

**Beschreibung**

Technisches Gebiet

Die Erfindung betrifft ein Verfahren zur Verdampfung von Flüssigkeiten unter vermindertem Druck insbesondere zum Zwecke ihrer Konzentration oder zur Abtrennung einer oder mehrerer ihrer Komponenten.

Stand der Technik

In der chemischen Technik stellt die Verdampfung von Flüssigkeiten einen wichtige Operation im Rahmen der verschiedensten Herstellungsprozesse dar, sei es um diese Flüssigkeiten zu konzentrieren oder aus einem komplexen Gemisch mehrerer Komponenten mit unterschiedlichen Siedepunkte eine oder mehrere Komponenten durch Destillation vom Rest der Flüssigkeit abzutrennen. Wesentlich für den Prozess der Destillation ist dabei das Kochen der Flüssigkeit, denn es schafft neben der für den von der Flüssigkeit angebotenen Oberfläche zusätzlich die innere Oberfläche der in der Flüssigkeit entstehenden und aufsteigenden Dampfblasen, wobei zusätzlich ein für den Stoff- und Energieaustausch günstiger Rühreffekt erzeugt wird, Insbesondere der Energieaustausch ist dabei von grosser Bedeutung, denn der Entzug der Verdampfungswärme durch die Bildung einer Dampfblase führt zu einer lokalen Abkühlung und damit zur Senkung des Dampfdrucks. Für die Aufrechterhaltung des Kochprozesses muss deshalb der verdampfenden Zone durch starke Konvektion kontinuierlich Wärme von aussen zugeführt werden.

Der Kochprozess setzt in dem Moment ein, wo der Dampfdruck der Flüssigkeit zumindest den auf der Flüssigkeit lastenden atmosphärischen Druck erreicht. In vielen Fällen liegt die Temperatur, bei der eine Flüssigkeit unter Normaldruck zu sieden beginnt, in einem Bereich, wo es zur thermischen Schädigung von Komponenten dieser Flüssigkeit kommt, z.B. bei der Konzentration oder Destillation von bioorganischen Flüssigkeiten, wie der Konzentration von Weinmosten, zur Gewinnung ätherischer Oele oder von pharmazeutischen Lösungen. In solchen Fällen erfolgt die Destillation unter vermindertem atmosphärischem Druck, wodurch der Kochprozess schon bei wesentlich niedrigeren Temperaturen möglich ist. Da die Zentrifugalkraft bei dem erfindungsgemässen Verfahren eine entscheidende Rolle spielt, soll der Stand der Technik speziell in Hinblick auf Vorrichtungen und Verfahren betrachtet werden, bei denen die Zentrifugalkraft verwendet wird.

Die Effizienz eines Verdampfungsprozesses, d.h. die Menge des pro Zeiteinheit produzierten Dampfs, wird einerseits durch die angebotene Stoffübergangsoberfläche und andererseits durch die ausreichende Nachlieferung der verbrauchten Verdampfungswärme bestimmt. Auf dem Gebiet der Vakuumverdampfung stellen Dünnschichtverdampfer deshalb eine häufig verwendete Verfahrensgruppe entsprechend dem Stand der Technik dar, wie dies z.B. im Handbuch für Chemiker und Verfahrensingenieure[1] beschrieben ist.

[1] Christe, Daniel S., Praxiswissen der chemischen Verfahrenstechnik, Handbuch für Chemlker und Verfahrensingenieure, Springer Berlin 2004

Bei Dünnschichtverdampfern tritt die Flüssigkeit in der Regel in den oberen Bereich eines unter vermindertem Druck stehenden aussenbeheizten Rohrkörpers ein und wird durch einen Zulaufverteiler gleichmässig über den Umfang der Innenwand verteilt. Die Flüssigkeit gerät dann in den Bereich rotierender Wischerblätter, welche sie unter Nutzung der Zentrifugalkraft in Form eines dünnen Flüssigkeitsfilms über die beheizte Innenwand verteilen, wodurch eine grosse Fläche für die Verdampfung zur Verfügung steht. Eine weitere wesentliche Aufgabe der Wischerblätter ist die Erzeugung von Turbulenzen im Film, wodurch es zu einem schnellen Wärmeaustausch zwischen der beheizten Wand und der Flüssigkeit kommt. Die dadurch bei geringer Ueberhitzung mögliche hohe Verdampfungskinetik des mechanisch gerührten Systems erlaubt einen schnellen Durchstrom auch hochviskoser Flüssigkeiten mit thermisch sensiblen Stoffen, wie Wirk- und Aromastoffe, Feinchemikalien und Polymere.

Grundsätzlich können die Wischer, wie z.B. beim System Luwa, starr auf einem Rotor angebracht sein, wobei in der Regel in Funktion der Viskosität der Flüssigkeit ein Wandabstand von 0.5 - 2 mm zwischen der Wischblattkante und der beheizten Wand eingehalten wird, Beim System Sambay sind die Wischer als Pendelklappen ausgebildet, welche durch die Zentrifugalkraft gegen die beheizte Wand gepresst werden, wobei sich die Distanz zur Wand in Funktion des Anpressdrucks sowie der Viskosität der Flüssigkeit selbsttätig einstellt. Andere Systeme verwenden auf Führungsstangen montierte Rollen, welche über den Film rollen oder flexible Wischblätter, welche bei Wandkontakt elastisch deformieren, ähnlich wie das bei den Wischerblättern auf der Windschutzscheibe von Autos der Fall ist.

Der im Dünnschichtverdampfer erzeugte Dampf wird in der Regel über eine Leitung einem Kondensator zugeführt, wo der Dampf z.B. durch Kühlung an einer von einem Kühlmedium durchströmten Rohrschlange in Kondensat umgewandelt wird, wobei eine Vakuumpumpe, welche den Unterdruck im System herstellt, in Serie mit dem Kondensator geschaltet ist.

Insgesamt kann gesagt werden, dass sich die Rolle der Zentrifugalkraft beim Dünnschichtverdampfer auf die Aufgabenstellung beschränkt, den durch die Wischblätter beschleunigten Flüssigkeitsfilm an der Wand zu halten, was schon durch Umfangsgeschwindigkeiten ab 3 m/s bewerkstelligt werden kann.

Falls thermisch noch schonendere Bedingungen für die Destillation verlangt werden, ist die Absenkung des Drucks aufäusserst niedrige Werte nötig. In einem normalen Dünnschichtverdampfer sind solche Verhältnisse nicht erzielbar, denn durch die räumliche Distanz zwischen Verdampfer und Kondensator baut sich auch bei einer grosszügig dimensionierten Verbindungsleitung ein zu hoher Druckgradient auf. Dieses Problem wird durch die Verfahrensgruppe der Kurzweg-Verdampfer gelöst. Dabei handelt es sich grundsätzlich auch um Dünnschichtverdampfer, jedoch ist der Kondensator direkt im Zentrum der Verdampfungszone angeordnet und wird von den Wischblättern umkreist. Der aus dem turbulenten Flüssigkeitsfilm austretende Dampf kann deshalb nach extrem kurzen radialen Weg direkt auf einer mit der Verdampfungsfläche fast identisch grossen Kühlfäche, z.B einer Rohrschlange, kondensieren, das Kondensat fliesst entlang der gekühlten Fläche nach unten, wo es gesammelt und abgepumpt wird, wobei der Rest der nicht verdampften Flüssigkeit, von den Wischblättern an der Wand gehalten, ebenfalls nach unten fliesst und dort an anderer Stelle ebenfalls abgepumpt wird, auch bei diesem Prinzip spielt die Zentrifugalkraft dieselbe Rolle wie beim vorher beschriebenen Dünnschichtverdampfer.

Eine weitere Verfahrensgruppe, wo die Zentrifugalkraft genutzt wird, sind die Rotationskegelverdampfer, z.B. der von Havourtech entwickelte Centrithermverdampfer[2]. Bei diesen Verfahren wird die zu konzentrierende Flüssigkeit auf die innere Mantelfläche beim kleineren Oeffnungsdurchmesser eines rotierenden Hohlkegels aufgespritzt, wobei sie unter dem Einfluss der Zentrifugalkraft sofort einen dünnen Film bildet, der in Sekundenbruchteilen gegen den grösseren Oeffnungsdurchmesser fliesst. Die äussere Mantelfläche dieses Hohlkegels kann dabei z.B. mit kondensierendem Dampf beheizt werden. Durch die extrem kurze Kontaktzeit aufgrund der hohen Filmgeschwindigkeit sowie der geringen Filmdicke kommt es zu einer sehr effizienten und gleichzeitig schonenden Verdampfung, sodass Verfahren dieser Art z.B. zur Ein- und Verdampfung von Natur-, Wirk- und Aromastoffen, Vitaminen, Proteinlösungen oder Fermentationsträgern verwendet werden.

US 4'995'945

Zudem offenbart DE401444C einen Rotationsverdampfer mit beheiztem rotierenden Zylinder.

Prinzip des erfindungsgemässen Verfahrens

Das erfindungsgemässe Verfahren zei chnet sich gegenüber dem Stand der Technik dadurch aus, dass der Zentrifugalkraft über die Stabilisierung eines Flüssigkeitsfilms hinaus auch noch die Aufgabe der direkten Dosierung der Flüssigkeitsmenge, ihre gleichmässige Verteilung über den Umfang und damit der Einstellung der Filmdicke zukommt, d.h. sie ermöglicht die exakte Regelung des Zuflusses aus der freien, unter atmosphärischen Druck stehenden Flüssigkeit in die unter vermindertem Druck stehende Verdampfungszone sowie nach erfolgter Verdampfung auch den Austritt des Konzentrats aus dieser Zone. Dies wird dadurch erreicht, dass zumindestens die axialen Endbereiche eines in einer Flüssigkeit befindlichen, über eine Weile von einem Motor angetriebenen und an seinen Stirnseiten durch Platten gegen axialen Zustrom von Flüssigkeit abgedeckten Rotors mit mindestens zwei gleichmässig über den Umfang verteilten radialen Schikanen, z.B. in Form von Flügelblättern mit einer wahlweise eine axiale Strömungskomponente erzeugenden Kurvatur, einen nach aussen entweder durch eine oder mehrere in radialer Richtung zu den rotierenden Schikanen beabstandete stationäre Schikanen, z.B. Bremsflügel begrenzten Bereich der Flüssigkeit in Rotation versetzen, wobei die Drehzahl des Rotors so gewählt wird, dass im Innenbereich des Rotors längs seiner Drehachse ein unter vermindertem Druck stehender rotationssymmetrischer Hohlraum innerhalb der Flüssigkeit mit einer für den Stoffübergang von Dampf zur Verfügung stehenden Mantelfläche gebildet wird, wobei der Durchmesser dieser Mantelfläche und damit die Dicke der den Hohlraum umgebenden rotierenden Flüssigkeitsschicht durch das Gleichgewicht der durch die Masse der rotierenden Flüssigkeit erzeugten Zentrifugalkraft mit der Gegenkraft, erzeugt aus der Summe des auf die Flüssigkeit von aussenwirkenden atmosphärischem und dem durch die Tauchtiefe des Rotors aufgebauten hydrostatischem Druck einerseits und dem im Hohlraum herrschenden Unterdruck andererseits bestimmt wird, und dass der in den Hohlraum übergetretene Dampf entweder über eine Leitung zu einem ausserhalb des Rotors befindlichen Kondensator mit nachgeschalteter Vakuumpumpe abgeführt oder an einem innerhalb des Hohlraums befindlichen Kondensator verflüssigt und die kondensierte Flüssigkeit mit einer Pumpe aus dem Hohlraum abgeführt wird, wobei die durch den Rühreffekt erzeugte Wärme einen Teil der durch die Verdampfung absolvierten Wärme kompensiert, während die restliche Wärme wahlweise durch ein Beheizungssystem gedeckt wird,

Kurze Beschreibung der Zeichnungen

Das erfindungsgemässe Verfahren und Beispiele von dafür verwendeten Vorrichtungen werden in den Bildern 1-8 zur Darstellung gebracht.

Dabei zeigt

Bild 1 das Grundkonzept des Verfahrens,

Bild 2A zeigt ein Beispiel einer Vorrichtung in Form einer perspektiven Aussenansicht eines einfachen Verdampfungsrotors, der in eine beliebige Flüssigkeit eingetaucht werden kann,

Bild 2B zeigt einen Schnitt senkrecht zur Drehachse dieses Rotors,

Bild 2C zeigt einen Längsschnitt entlang der Drehachse dieses Rotors,

Bild 3 zeigt ein weiteres Beispiel einer Vorrichtung in Form eines Rotors ähnlicher Bauart, der sich in einem zylindrischen Gefäss mit Heizmantel befindet.

Bild 4A zeigt ein drittes Beispiel einer Vorrichtung in Form einer perspektivischen Aussenansicht eines Verdampfungsrotors mit Schikanen in Form von Flügelrädern und einer Mittelzone in Form eines zylindrischen Mantelrohrs, der in eine beliebige Flüssigkeit eingetaucht werden kann.

Bild 4B zeigt einen Längsschnitt entlang der Drehachse dieses Rotors.

Bild 4C zeigt einen detaillierten Bereich des Längsschnitts dieses Rotors.

Bild 4D zeigt diesen detaillierten Bereich in einem Schnitt tangential zur Drehachse des Rotors.

Die Bilder 4E - 4G zeigen als Beispiele Querschnitte von Zinken zur Erzeugung von Turbulenzen im Flüssigkeitsfilm dieses Rotors.

Bild 5A zeigt ein viertes Beispiel einer Vorrichtung in Form einer perspektivischen Aussenansicht eines Verdampfungsrotors mit einer zylindrischen Mittelzone, bei dem die Schikanen als Schleuderräder mit radialen Kanälen ausgebildet sind und der ebenfalls in eine beliebige Flüssigkeit eingetaucht werden kann.

Bild 5B zeigt einen Längsschnitt entlang der Drehachse dieses Rotors

Bild 6 zeigt den Längsschnitt durch ein fünftes Beispiel einer Vorrichtung, wobei der Verdampfungsrotor in einem Gehäuse eingebaut ist und in seinem Inneren einen Kondensator enthält.

Bild 7 zeigt einen Längsschnitt durch ein sechstes Beispiel einer Vorrichtung ähnlich dem Rotor von Bild 6, wobei dieser jedoch ohne Gehäuse frei in eine beliebige Flüssigkeit eingetaucht werden kann.

Bild 8 zeigt einen Längsschnitt durch eine dem Bild 5B ähnliche Vorrichtung, wobei sie gegenüber dieser eine wesentlich grössere Verdampfungsfläche besitzt.

Beispiele zur bevorzugten Ausführung der Erfindung

Im folgenden wird das Verfahren anhand einiger Beispiele von Vorrichtungen entsprechend dem erfindungsgemässen Verfahren beschrieben.

Bild 1 zeigt das dem Verfahren zugrundeliegende Konzept, wobei ein Bereich 11 einer Flüssigkeit 1 durch in ihn eingreifende Schikanen eines in diese Flüssigkeit eingetauchten Rotors zwischen zwei stirnseitig angeordneten Scheiben 311 und 5 um eine Achse 21 in Rotation versetzt wird, wobei der Rotor über eine Welle 2 von einem ausserhalb der Flüssigkeit befindlichen drehzahlgeregelten Motor angetrieben wird. Mit Schikanen sind im Rahmen dieser Beschreibung alle möglichen Elemente eines Rotors gemeint, welche auf die unmittelbar benachbarte Flüssigkeit in tangentialer Richtung Kraft ausüben. Aus diesem Grund werden sowohl die den Bereich 11 der Flüssigkeit in Rotation versetzenden Rotorschikanen wie auch die diesen Bereich radial nach aussen begrenzenden stationären Schikanen in diesem Bild ausdrücklich nicht zur Darstellung gebracht, da ihre spezifische vorrichtungsmässige Ausbildung, d.h. die Art, wie sie den Flüssigkeitsbereich in Rotation versetzen bzw. seine Aus-dehnung begrenzen, für die Funktionsweise des erfindungsgemässen Verfahrens nicht von Belang ist.

Wesentlich für die Funktion des erfindungsgemässen Verfahrens ist hingegen die radiale Begrenzung des rotierenden Flüssigkeitsbereichs nach aussen, denn ohne eine solche Begrenzung würden grössere Bereiche der umgebenden Flüssigkeit in Bewegung gesetzt, was zur Ausbildung eines zur Flüssigkeitsoberfläche reichenden Saugwirbels und damit zum Eindringen von Aussenluft in den unter vermindertem Druck stehenden Hohlraum innerhalb des Rotors führen würde. Die radiale Begrenzung wird in der prinzipiellen Anordnung von Bild 1 beispielhaft durch zwei Alternativen zur Darstellung gebracht. Die eine Alternative besteht in mindestens einer stationären Schikane in Form eines Bremsflügels 51, die - bei Anwesenheit von mehreren Bremflügeln - konzentrisch um die Drehachse des Rotors angeordnet sind. Der radiale Abstand dieser Bremsflügel 51 von den rotierenden Rotorschikanen kann dabei zwischen Bruchteilen von Millimetern bis hin zu einem Drittel des Durchmessers der lokal von den rotierenden Schikanen bestrichenen Mantelfläche liegen. Als zweites alternatives Beispiel einer stationären Schikane wird in Bild 1 ein Mantelrohr 54 gezeigt, welches die rotierenden Schikanen allseitig umgibt. Im Bild sind diese beiden Alternativen gleichzeitig und nur in einem axialen Teilbereich des rotierenden Flüssigkeitsbereichs 11 dargestellt, in der Realität wird entweder die eine oder die andere Alternative ergriffen, wobei diese dann den gesamten axialen Bereich des rotierenden Flüssigkeitsbereichs abdeckt.

Der rotierende Flüssigkeitsbereich 11 bildet unter dem Einfluss der Rotation einen Wirbel, seine Massenträgheit erzeugt entsprechend dem Pfeil 993 in der rotierenden Masse eine Zentrifugalkraft, welche ab einer bestimmten Drehzahl n* so gross ist, dass es zur Bildung eines rotationssymmetrischen Hohlraums kommt, der mit der von aussen in Richtung des Pfeils 991 wirkenden Druckkraft, bestehend aus der Summe von atmosphärischem Druck $p_{atm}$ und hydrostatischem Druck $p_{hydr}$ und dem in Gegenrichtung auf die Mantelfläche 13 der rotierenden Füssigkeit 11 im Hohlraum herrschenden Druck $p_{Hohl}$ im Gleichgewicht steht. Dabei besitzt der im Bild gezeigte rotierende Flüssigkeitsbereich 11 in axialer Richtung eine infinitesimale Ausdehnung, da sich die hydrostatische Druckkomponente in Funktion der lokalen Eintauchtiefe des Rotors ändert. Damit ändert sich lokal auch die Dicke 12 des rotierenden Flüssigkeitsbereichs 11.

Dieser schematisch in Bild 1 gezeigte rotierende Flüssigkeitsbereich kann die gesamte Mantelfläche des Rotors umfassen, er kann jedoch auch nur auf die axialen Endbereiche des Rotors beschränkt sein, Wird dann im einen Endbereich aufgrund entsprechend abweichender Geometrie der lokalen Schikanen ein vom zweiten unter abweichender Zentrifugalkraft stehender Flüssigkeitsbereich erzeugt, so kommt es unter dem Einfluss der unterschiedlichen Kräfte zum Aufbau einer Strömung in axialer Richtung, welche zur stetigen Erneuerung des rotierenden Flüssigkeitsbereichs 11 und damit seiner Oberfläche 13 führt.

Ein Gradient der Zentrifugalkraft längs der Drehachse 21 des Rotors kann auch bei gleichbleibender, d.h. zylindrischer Geometrie der von den rotierenden Schikanen bestrichenen Mantelfläche erzeugt werden, indem der Abstand der stationären Schikanen in axialer Richtung ändert. Wird z.B. der radiale Abstand der stationären Schikanen in Form eines Bremsflügels 51 oder in Form eine Mantelrohrs 54 im einen Endbereich des Rotors grösser zu der von den rotierenden Schikanen bestrichenen Mantelfläche gewählt, so entsteht dort ein rotierender Flüssigkeitsbereich 11 mit grösserem Aussendurchmesser, sodass aufgrund der grösseren bewegten Masse lokal eine grössere Zentrifugalkraft entsteht, was wiederum zum Aufbau einer Strömung in axialer Richtung vom anderen Endbereich her führt.

Wesentlich für die Funktion des erfindungsgemässen Verfahrens sind die Stirnplatten 311 und 5, welche die rotierende Flüssigkeit 11 in beiden axialen Richtungen begrenzen. Ohne diese Platten würde es nämlich zu einem Nachströmen von Flüssigkeit aus diesen Richtungen kommen, wodurch die Bildung des Hohlraums und damit seiner potentiell für den Verdampfungsprozess zur Verfügung stehenden inneren Mantelfläche 13 verunmöglicht würde. Dabei können diese Platten sowohl Teil des Rotors sein, d.h. an seiner Drehbewegung teilnehmen, wie auch stationär, d.h. nicht an seiner Rotation teilnehmend, in einem geringen Abstand zu seinen Stirnseiten angeordnet sein, wobei der rotierende Flüssigkeitsbereich 11 dann eine dynamische Flüssigkeitsdichtung bildet, welcher den unter vermindertem Druck stehenden Hohlraum gegen unerwünschten Zufluss von Flüssigkeit schütz. In der vorliegenden schematischen Darstellung wird zum Beispiel angenommen, dass die Endplatte 311 Teil des Rotors ist, d.h. die Drehbewegung der Welle 2 auf die nicht gezeigten Schikanen überträgt, während die Endplatte 5 stationär zur Unterseite des Rotors angeordnet ist, d.h. nicht an dessen Drehbewegung teilnimmt.

Ueber die Mantelfläche 13 des rotierenden Flüssigkeitsbereichs 11 kann Dampf in den Hohlraum übertreten. Ohne kontinuierliche Entfernung dieses Dampfs würde der Verdampfungsprozess in dem Moment enden, wo der Druck des in den Hohlraum übergetretenen Dampfs den Dampfdruck der rotierenden Flüssigkeit erreicht. Da der Zugang zum unter vermindertem Druck stehenden Hohlraum innerhalb des rotierenden Flüssigkeitsbereichs 11 nur an seinen Stirnseiten im Bereich der Drehachse 21 möglich ist, ergeben sich für die Beseitigung des Dampfs im erfindungsmässigen Sinn mehrere Alternativen, von denen zwei in Bild 1 in schematischer Weise zur Darstellung kommen. Der eine Zugang erfolgt durch den zentralen Absaugkanal 23 der Rotorwelle 2, welche in fester Verbindung mit der Endplatte 311 des Rotors steht. Ueber diesen Absaugkanal 23 gelangt der Dampf in Richtung des Pfeils 92a zu einer im Bild nicht gezeigten vakuumdichten Drehdichtung und von dort über eine Leitung zu einem Kondensator beliebiger Bauart und einer hinter den Kondensator geschalteten Vakuumpumpe. Die Absaugung kann jedoch in alternativer Weise auch über die in diesem Falle stationären, d.h. nicht an der Rotation teilnehmenden Platte 5 verbundene Absaugleitung 52 im Sinne des Pfeils 92 erfolgen. Dieselbe Zentrifugalkraft, welche die innere Mantelfläche 13 der rotierenden Flüssigkeit 11 gegen den im Hohlraum herrschenden Unterdruck stabil hält, schafft auch eine dynamische Vakuumdichtung zwischen der Stirnseite der im Bild nicht gezeigten Schikanen des Rotors und der Endplatte 5. In diesem Falle entfällt die Notwendigkeit einer vakuumdichten Drehdichtung und die Leitung 52 kann aus der Flüssigkeit heraus und direkt zu einem Kondensator mit nachgeschalteter Vakuumpumpe geführt werden. Bei dieser Variante des erfindungsgemässen Verfahrens wird die Flüssigkeit durch Wirkung der Zentrifugalkraft nicht nur zu ihrem eigenen Vakuumgefäss, in das sie die Flüssigkeit gleichmässig über den Umfang verteilt und in gewünschter Menge einbringt, sondern sie ermöglicht auch den Anschluss einer Absaugleitung an den Verdampfungsraum ohne eine einzige vakuumdichte Drehdichtung.

Eine dritte, nicht in Bild 1 gezeigte Alternative, benützt die stationäre Endplatte 5 als Ausgangspunkt für einen direkt innerhalb des Zentrums des Hohlraums angeordneten Kondensator, der grundsätzlich entsprechend der Verfahrensweise der Gruppe der Kurzweg-Verdampfer funktioniert, d.h. der Dampf gelangt in radialer Richtung auf die Kühlfläche dieses Kondensators, das Kondensat fliesst nach unten in Richtung der Endplatte 5 ab, wird dort in einem Gefäss gesammelt und mit einer Pumpe über eine Leitung nach aussen abtransportiert.

Würde der innerhalb des rotierenden Flüssigkeitsbereichs 11 gebildete Hohlraum nicht mit einer ausserhalb des Rotors angeordneten Vakuumpumpe abgesaugt, so käme es im Hohlraum zum Aufbau eines in Richtung des Pfeils 992 wirkenden Drucks $p_{Hohl}$, welcher dem Dampfdruck des rotierenden Flüssigkeitsbereichs 11 sowie dem Gleichgewichtsdruck etwaiger in Lösung befindlicher Permanentgase entspricht. Nur wenn dieser Druck $p_{Hohl}$ unter dem Einfluss der Saugleistung der Vakuumpumpe unter den Dampfdruck der Flüssigkeit abgesenkt wird, kann es durch Kochen zu einem effizienten Verdampfungsprozess im rotierenden Flüssigkeitsbereichs 11 kommen. Die kritische Drehzahl n* zur Erzeugung und Stabilisierung der Geometrie eines in axialer Richtung infinitesimal ausgedehnten Hohlraums innerhalb des Bereichs der rotierenden Flüssgkeit 11 kann durch die Formel [1] berechnet werden:

$$n^* \;\; = \;\; \sqrt{\frac{3 \cdot \left( p_{atn} + p_{hydr} - p_{Hohl} \right) \cdot r_2}{4 \cdot \pi^2 \cdot \rho \cdot \left( r_2^3 - r_1^3 \right)}} \qquad [1]$$

In dieser Formel bedeuten:

n*       kritische Rotordrehzahl [$s^{-1}$]
$\rho$        Dichte der Flüssigkeit [$kg/m^3$]
$r_2$       lokaler Aussenradius des rotierenden Flüssigkeitsbereichs [m] (Pfeil 99)
$r_1$       lokaler Innenradius des rotierenden Flüssigkeitsbereichs [m] (Pfeil 99a)
$p_{atm}$     atmosphärischer Druck [$N/m^2$]
$p_{hydr}$     hydrostatischer Druck [$N/m^2$]
$p_{Hohl}$     Druck im Hohlraum innerhalb des rotierenden Flüssigkeitsbereichs 11 [$N/m^2$]

Der Radius $r_1$, entsprechend dem Pfeil 99a ist gleichzeitig der lokale Durchmesser der für die Verdampfung zur Verfügung stehenden Mantelfläche des Hohlraums, der Aussendurchmesser $r_2$ wird in der Regel durch den radialen Abstand der stationären Schikanen, z.B. Bremsflügeln 51 oder dem Mantelrohr 54, zu der von den im Bild nicht gezeigten Rotorschikanen bestrichenen Mantelfläche bestimmt, gleichzeitig bestimmt die Differenz dieser Radien die lokale Dicke 12 des rotierenden Flüssigkeitsbereichs und damit die lokale Grösse der Zentrifugalkraft. Es muss bemerkt werden, dass die Formel [1] streng genommen nur für exakt radial ausgerichtete Schikanen gilt, welche nur eine tangentiale Strömungskomponente erzeugen. Falls die Schikanen z.B. einen Anstellwinkel in axialer Richtung besitzen, so entsteht zusätzlich neben der tangentialen auch eine axiale Strömungskomponente und die Drehzahl für die Aufrechterhaltung des Innenradius des rotierenden Füssigkeitsbereichs 11 muss entsprechend erhöht werden.

Innerhalb dieser rotierenden Schicht steigt der Flüssigkeitsdruck von $p_{Hohl}$ beim Radius $r_1$ der Mantelfläche des Hohlraums, entsprechend dem Pfeil 99a bis zum Wert $p_{atm}$ + $p_{hydr}$ beim Aussenradius $r_2$ an, der gleichzeitig die Grenze zwischen dem rotierenden Flüssigkeitsbereich 11 und der restlichen Flüssigkeit 1 darstellt. Analog zum mit zunehmender Tiefe aufgrund der Schwerkraft linear steigenden Druck in einer Flüssigkeit gibt es im rotierenden Flüssigkeitsbereich also einen Anstieg in radialer Richtung, in beiden Fällen ist die Bildung von Kochblasen - die Existenz von Blasenkeimen vorausgesetzt - nur in dem Bereich des rotierenden Flüssigkeitsbereichs 11 möglich, dessen Druck unterhalb des durch die lokale Temperatur bestimmten lokalen Dampfdrucks der Flüssigkeit liegt, Ueber die Wahl der Drehzahl n kann die Geometrie des Hohlraums sowie die Dicke 12 des rotierenden Flüssigkeitsbereichs exakt und elegant ohne Zuhilfename von variabel einstellbaren Sperrorganen und Düsen, welche die Flüssigkeit wie bei den Dünnschichtverdampfern des Standes der Technik auf die innere Mantelfläche des Rotorgehäuses verteilen, geregelt werden, Beim erfindungsgemässen Verfahren handelt es sich im Gegensatz zum Stand der Technik deshalb um ein Verdampfungsverfahren, bei dem kein Vakuumbehälter nötig ist, da die zu verdampfende Flüssigkeit selbst ein "dynamisches Vakuumgefäss" bildet, dessen Mantelfläche für die Verdampfung zur Verfügung steht, wobei diese Mantelfläche durch zentrifugale Kräfte gegen die Druckdifferenz stabil gehalten wird.

Diese Art der durch Zentrifugalkraft bestimmten Einstellung der Schichtdicke ist ein grosser Vorteil der erfindungsgemässen Verfahrens gegenüber dem Stand der Technik, denn da keine variabel einstellbare Sperrorgane und auch keine Verteilungsdüsen vorhanden sind, können auch hochviskose sowie vor allem in Suspension befindliche Festkörper höherer Dichte verarbeitet werden, da diese Festkörper unter der Wirkung der Zentrifugalkraft analog zu einer Zentrifuge gegen den Aussenbereich der rotierenden Flüssigkeitszone 11 verschoben werden, sodass die innere Mantelfläche 13 des Hohlraums vorzugsweise reine Flüssigkeit zur Verdampfung anbietet.

Durch entsprechende Wahl der Drehzahl können, angefangen von grossen Schichtdicken 12 auch dünne Flüssigkeitsfilme erzeugt werden, wie sie in der Dünnschichttechnologie sowie bei den Rotationskegelverdampfem üblich sind. Damit ist das der Erfindung zugrundeliegende Verfahrensprinzip beschrieben, die von diesem Prinzip abgeleiteten Vorrichtungen, die in den folgenden Bildern vorgestellt werden, zeigen wie zwei für die Effizienz eines Verdampfers wichtige Vorrichtungsmerkmale in dieses Verfahren integriert werden können. Dies ist zum einen eine hohe Emeuerungs-rate der rotierenden Flüssigkeit und insbesondere ihrer inneren Mantelfläche 13, zum anderen die Erzwingung hoher Turbulenzen innerhalb des rotierenden Flüssigkeitsbereichs 11, damit ein hoher Konzentrations- und Wärmeaustausch in radialer Richtung gewährleistet ist Die folgenden Bilder zeigen Beispiele von Vorrichtungen, wie diese Vorichtungsmerkmale in das erfindungsgemässe Verfahren integriert werden können.

Bild 2A zeigt eine besonders einfache Vorrichtung zur Durchführung des erfindungsgemässen Verfahrens in perspektivischer Aussenansicht. Um eine Rotorwelle 2 mit der Drehachse 21 sind Schikanen in Form von Flügelblättern 3 angeordnet, die in axialer Richtung einen Anstellwinkel besitzen, damit beim Rühren neben der in radialer Richtung in der Flüssigkeit entstehenden Zentrifugalkraft auch eine in axialer Richtung wirkende Strömung entsteht. Die Flügelblätter 3 werden an ihren Stirnflächen durch die Endplatten 311 und 331 abgeschlossen, welche Zustrom von Flüssigkeit aus axialer Richtung verhindern. Zwischen den Flügelblättern 3 besitzt die Welle 2 radiale Kanäle 22, welche in einen zentralen Kanal 23 in der Welle führen, der über eine nicht gezeigte und ausserhalb der Flüssigkeit befindliche Drehdichtung sowie eine Leitung zu einem Kondensator mit nachgeschalteter Vakuumpumpe führt.

Eine stationäre Schikane in Form des Bremsbleches 51 ist seitlich zum Rotor angeordnet und begrenzt in radialer Richtung den Bereich der vom Rotor in Drehbewegung versetzten Flüssigkeit, verhindert gleichzeitig, dass sich im Rest der Flüssigkeit ein Saugwirbel bildet. Die Erzeugung einer axialen Strömung zur Erneuerung der Flüssigkeit innerhalb des rotierenden Bereichs 11 erfolgt bei diesem ersten Vorrichtungsbeispiel lediglich durch den Anstellwinkel der Flügelblätter 3, sie könnte jedoch auch dadurch erfolgen, dass der radiale Abstand des Bremsblechs 51 von der Aussenkante der Schikanen 3 am einen axialen Ende des Rotors grösser als am anderen ist.

Bild 2B zeigt die Vorrichtung von Bild 2A in einem radialen Schnitt senkrecht zur Drehachse 21, der in etwa auf halber Höhe des Rotors angelegt ist, zur zusätzlichen Darstellung der Flüssigkeits- und Dampfströme innerhalb des Rotors. Der Rotor befindet sich eingetaucht in der Flüssigkeit 1 eines beliebigen Gefässes 7. Von der Achse 2 gehen 6 Schikanen in Form von Flügelblättern 3 aus, welche den Bereich 11 der Flüssigkeit in Rotation versetzen, wobei dieser Bereich durch eine stationäre Schikane in Form des Bremsblechs 51 radial nach aussen auf die Dicke 12 begrenzt wird. Zwischen je zwei Schikanen 3 sind in den zentralen Absaugkanal 23 führende radiale Kanäle 22 angeordnet, welche den entsprechend Pfeil 91 aus der inneren Mantelfläche 13 der in Rotation versetzten Flüssigkeit 11 austretenden Dampf über eine im Bild nicht gezeigte, zwischen dem Rotor und dem Antriebsmotor ausserhalb der Flüssigkeit angeordnete Drehdichtung und von dort über eine Leitung zu einem Kondensator beliebiger Bauart mit nachgeschalteter Vakuumpumpe transportieren.

Bild 2C zeigt die in den Bildern 2A und 2B gezeigte Vorrichtung in einem Längsschnitt, der entlang der Rotationsachse 21 angelegt ist, zur Darstellung der Flüssigkeits- und Dampfströme. Auch hier besitzen die Ziffern dieselbe Bedeutung wie in den beiden vorhergehenden Bildern, zusätzlich bezeichnet Pfeil 92 die Transportrichtung des Dampfs in Richtung zum Kondensator und zur Vakuumpumpe,

Die in den Bildern 2A - 2C gezeigte Vorrichtung besitzt keine direkte Beheizung, d.h. die durch die Verdampfung entzogene Wärme muss in einem anderen Bereich der Flüssigkeit 1 nachgeliefert werden, z.B. durch eine Aussenbeheizung des Gefässes 7 oder durch Beheizung der Flüssigkeit z.B. durch einen Tauchsieder innerhalb des Gefässes. Wird eine direkte Beheizung des Bereichs der rotierenden Flüssigkeit 11 im Rotor gewünscht, so kann dies z.B. erfolgen, indem der aus einem metallischen Material gefertigte Rotor über eine konzentrisch zum Rotor angeordnete, im Bild nicht gezeigte Induktionsspule beheizt wird.

Bild 3 zeigt die in den Bildern 2A - 2C gezeigte Vorrichtung, jedoch in einem oben offenen Durchlaufgefäss 7, dessen Mantelfläche den Rotor so eng umschliesst, dass es in diesem Bereich auch die Funktion der in den Bildern 2A - 2C gezeigten statischen Schikane 51, d.h. die nach aussen radiale Begrenzung des rotierenden Flüssigkeitsbereichs 11 übernehmen kann. Gleichzeitig trägt das Gefäss 7 im Bereich der Rotorschikanen 3 einen Heizmantel 81, dessen Beheizung nach einem der in der Verdampfungstechnik üblichen Prinzip, z.B. durch Dampf, erfolgt, Die Flüssigkeit gelangt beim Zulauf 72 entsprechend Pfeil 94 in das Gefäss 7, strömt entsprechend Pfeil 95 durch den engen Spalt längs der Mantelfläche des Rotors und verlässt das Gefäss 7 durch den seitlichen Abfluss 73 entsprechend Pfeil 96 als Konzentrat, wobei das Gefäss 7 entweder im einmaligen Durchlauf oder auch als Teil eines Kreislaufs mehrmals durchströmt wird.

Bild 4A zeigt eine weitere Vorrichtung des erfindungsgemässen Verfahrens in perspektivischer Aussendarstellung, bei der die Schikanen des Rotors in zwei axial endständige Zonen aufgeteilt sind, die in der Mitte durch einen zylindrischen Rohrkörper 32 verbunden sind. Im unteren Bereich ist ein Kranz von 6 Schikanen in Form von Flügelblättern 33 über eine stirnseitige Endplatte 331 mit dem Rohrkörper 32 verbunden, im oberen Bereich ist ein zweiter Kranz von 6 Schikanen in Form von Flügelblättern 31 zwischen den beiden stirnseitigen Endplatten 311 und 312 angeordnet, wobei die Endplatte 311 die Verbindung zur Welle 2 und die Endplatte 312 die Verbindung zum Rohrkörper 32 herstellt.

Die unteren Kanten der Rotorschikanen 33 rotieren in geringfügigem Abstand entsprechend den Pfeilen 14 von z.B. 1 mm zur stirnseitig angeordneten stationären Bodenplatte 5 und bilden eine dynamische Vakuumdichtung, welche unerwünschtes Einströmen von zusätzlicher Flüssigkeit in den unter vermindertem Druck stehenden Hohlraum innerhalb des Rotors verhindert. Durch das Zentrum der stationären Endplatte wird das zentrale Absaugrohr 52 geführt, welches sich in der Rohrleitung 53 fortsetzt, welche zu einem nicht dargestellten und ausserhalb der Flüssigkeit angeordneten Kondensator mit nachgeschalteter Vakuumpumpe führt. Rund um den Rotor sind 6 statische Schikanen in Form von Bremsflügeln 51 angeordnet, welche im unteren Bereich eine Ausbuchtung 511 besitzen, damit sie denselben oder ähnlichen radialen Abstand zu den Flügelblättern 33 besitzen, wie dies in ihrem oberen Bereich zu den Flügelblättern 31 der Fall ist. Sämtliche statischen Schikanen 51 setzen sich nach oben bis zu einer ausserhalb der Flüssigkeit befindlichen und nicht eingezeichneten Halteplatte fort, durch die ebenfalls die Welle 2 durch ein Loch zu einem mit der Halteplatte verbundenen Lagerblock und von dort über eine Kupplung zum Motor geführt wird.

Bild 4B zeigt einen Längsschnitt durch die Vorrichtung von Bild 4A zur Darstellung der Flüssigkeits- und Dampfströme innerhalb des Rotors. Da die Flügelblätter 33 eine geringere radiale Länge wie die Flügelblätter 31 aufweisen, erzeugen sie eine geringere Zentrifugalkraft, wobei die Drehzahl des Rotors so gewählt ist, dass die Flüssigkeit mit einer Filmdicke entsprechend Pfeilen 121 von unten in den Rohrkörper 32 eintritt. Da im Bereich der oberen Flügelblätter 31 eine höhere Zentrifugalkraft herrscht, kommt es zu einer starken Beschleunigung und Verdünnung des Films in Richtung des Pfeils 95 und zum radialen Austritt entsprechend Pfeil 96 aus dem Rotor. Die im Spalt 14 zwischen der Stirnseite der unteren Flügelblätter 34 und der Bodenplatte 5 mitrotierende Flüssigkeit bildet eine dynamische Vakuumdichtung und verhindert das unkontrollierte Eindringen von Flüssigkeit 1 in den Rotor, sodass die einfliessende Menge exakt über die Drehzahl geregelt werden kann. Die Menge der bei den Flügelblättern 33 eindringenden Flüssigkeitsmenge kann jedoch auch durch Aenderung der Spaltbreite 14 bei konstanter Drehzahl geregelt werden, indem man die Position der stationären Endplatte 5 in vertikaler Richtung verschiebt, sodass die dynamische Flüssigkeitsdichtung einen Teil der Flüssigkeit durchlässt.

Falls eine Erhöhung der Turbulenz im Flüssigkeitsfilm innerhalb des zylindrischen Mantelrohrs 32 erwünscht ist, kann wahlweise - ausgehend von der statischen Bodenplatte 5 - ein stationäres Wischerblatt 4, bestehend aus einer Haltestange 41 mit in den Flüssigkeitsfilm in radialer Richtung eintauchenden kammartigen Zinken angebracht werden, welche eine bremswirkung in der schnell rotierenden Flüssigkeit erzeugen, wie dies in den Bildern 4c und 4d näher erläutert ist.

Die dem Flüssigkeitsfilm entzogene Verdampfungswärme wird bei diesem Beispiel der Vorrichtung durch einen Infrarot-Heizkörper 82 kompensiert, der konzentrisch um die im Zentrum befindliche Absaugleitung 52 angeordnet ist. In der Praxis kann dies z.B. durch eine bifilare Wicklung von vakuumdicht mit rostfreiem Stahl oder einer Superlegierung ummantelten und mit einer Keramikschicht elektrisch isolierten Widerstandsheizdrähten erfolgen, wobei die elektrischen Anschlüsse mit Vakuumdurchführungen durch die stationäre Endplatte 5 erfolgen. Der Vorteil einer solchen Beheizung liegt in der Tatsache, dass die Infrarot-Strahlen auch das Innere des Flüssigkeitsfilms beheizen. Eine alternative Beheizungsmöglichkeit besteht auch z.B. durch indirekte Beheizung der Zinken der stationären Wischerblätter 4, z.B. durch elektrische Widerstandsbeheizung ihrer Haltestangen 41.

Bild 4C zeigt eine Detailansicht eines Abschnitts eines stationären Wischerblatts 4 mit einigen seiner seitlich angeordneten Zinken 411 mit zylindrischem Querschnitt, welche bei diesem Beispiel fast bis zum Innenumfang des zylindrischen Mantelrohrs 32 reichen, sodass sie Turbulenken fast über die gesamte Breite des Flüssigkeitsfilms erzeugen. Die Zinken 411 spielen dabei eine ähnliche Rolle wie die Pfeiler einer Brücke in einem schnellfliessenden Gewässer: vor der Zinke kommt es zun Aufbau einer Stauzone 111, wobei die Flüssigkeit beidseitig der Zinke abgelenkt wird, hinter der Zinke zu einer Unterdruckzone 112 mit starker Verwirbelung. Bei einem Verdampfungsprozess kommt es in solchen Unterdruckzonen bevorzugt zur Bildung von Dampfblasen, gleichzeitig sorgt die dadurch entstehende Turbulenz für einen Konzentrations- und Temperaturausgleich im Flüssigkeitsfilm.

Bild 4D zeigt die Verhältnisse von Bild 4c in radialer Richtung, wobei hier die Strömungsableitungen und die Wirbel entsprechend Pfeilen 951 und 952 in schematischer Weise eingezeichnet sind, wobei Pfeil 95a die ungestörte tangentiale Strömung vor Erreichung der Zinken darstellt.

Die Bilder 4E- 4G zeigen einige Beispiele möglicher Querschnitte von Zinken, Bild 4E zeigt dabei die in den beiden vorherigen Bildern verwendete runde Zinke 411, Bild 4F eine Zinke 412 mit dreieckigem Querschnitt, Bild 4G eine schmale wie ein Flügelblatt geformte Zinke 413, welche einen Anstellwinkel zur ankommenden Strömung entsprechend Pfeil 95a besitzt. Innerhalb eines stationären Wischerblatts 4 können die Anstellwinkel solcher Zinken abwechseln, dies gilt auch für Zinken, die sich in gleicher axialer Position auf der Haltestange 41 des über den Umfang verteilten nächsten Wischerblattes 4 befinden, sodass die Strömung abwechselnd auf die rechte und linke Seite der Zinke abgelenkt wird. Für alle Zinkenformen gilt, dass die axialen Positionen der Zinken von einem über den Umfang verteilten stationären Wischerblatt 4 zum nächsten variieren können, sodass die Zinken des nächsten vom Flüssigkeitsfilm angeströmten Wischerblatts sich auf Teilkreisen befinden, die mittig zwischen den Teilkreisen von jeweils zwei benachbarten Zinken des vorherigen Wischerblatts 4 liegen. Eine solche Abfolge sorgt für eine möglichst gleichmässige turbulente Durchwirbelung des Flüssigkeitsfilms.

Grundsätzlich können die Zinken jegliche Querselmittsform besitzen, welche einen günstigen hydrodynamischen Einfluss, d.h. eine gut dosierte Turbulenzerzeugung im Flüssigkeitsfilm erzeugt, ohne die in Richtung des Pfeils 95a vorwiegend in tangentialer Richtung verlaufende Strömung in unzulässiger Weise zu stark abzubremsen.

In Fällen wo stationäre Wischerblätter 4 innerhalb eines längeren Mantelrohrs 32 angeordnet sind, besteht die Gefahr, dass die Rotation des Flüssigkeitsfilms zu stark gebremst wird. Um dieser Gefahr zu begegnen, kann die innere Mantelfläche des Mantelrohrs 32 mit Verrippungen oder Ausbuchtungen versehen werden, welche die Rotation effizienter auf den Flüssigkeitsfilm übertragen als dies bei glatter Oberfläche der Fall ist. Insgesamt ist zu diesem Typ der Vorrichtung mit stationären Wischerblättern und einem Mantelrohr mit strukturierter Innenoberfläche zu sagen, dass er weniger für höherviskose Flüssigkeiten und nur bedingt für Suspensionen mit gröberen Festkörpern geeignet, ist, da die Gefahr der Absetzung dieser Partikel zwischen den Zinken sowie in den Vertiefungen der inneren Mantelfläche des Mantelrohr besteht.

Bei allen bisher gezeigten Schleuderrädern, die stationäre Schikanen in Form von Bremsflügeln 51 besitzen, kann man diese wahlweise auch in radialer Richtung verschiebbar anordnen. Wird der radiale Abstand zu den Flügelblättern bzw. Schleuderrädern vergrössert, so wird ein grösserer Bereich der umliegenden Flüssigkeit in Rotation versetzt, womit sich die Dicke 12 des rotierenden Flüssigkeitsbereichs erhöht. Durch diese Massnahme kommt es zu einer Erhöhung der Zentrifugalkraft, wodurch die Drehzahl des Rotors unter Beibehaltung seiner Geometrie gesenkt werden kann.

Bild 5A zeigt eine Vorrichtung ähnlich derjenigen von Bild 4A, nur dass die Flügelblätter 33 hier durch ein Schleuderrad 34 mit untenseitigen Radialnuten 341 und die Flügelblätter 31 durch ein zweites Schleuderrad 35 mit Radialbohrungen 351 ersetzt sind. Analog zum vorherigen Beispiel von Bild 4A besitzt auch das Schleuderrad 34 einen etwas geringeren Aussendurchmesser wie das Schleuderrad 35 und es rotiert in ebenfalls in geringen Abstand entsprechend den Pfeilen 14 zur stirnseitig angeordneten statischen Bodenplatte 5 unter Bildung einer dynamischen Flüssigkeitsdichtung. Im Unterschied zur vorher gezeigten Vorrichtung verfügt aber diese Vorrichtung über separate stationäre Schikanen in Form von Bremsflügeln 512 für das untere Schleuderrad 34 und Bremsflügeln 513 für das obere Schleuderrad 35, wobei wahlweise zunmindest einer der beiden Sätze von Bremsflügeln unabhängig zum anderen in radialer Richtung verstellbar sind. Durch diese Möglichkeit lässt sich die Zentrifugalkraft im unteren Bereich des Rotors unabhängig von derjenigen im oberen Bereich einstellen, wodurch die Menge der den Rotor durchströmenden Flüssigkeit in weiten Grenzen unabhängig von der Filmdicke geregelt werden kann.

Bild 5B zeigt den Rotor von Bild 5A in einem Längsschnitt, wobei die Flüssigkeits- und Dampfströme durch den Rotor sichtbar gemacht werden, Die Stirnfläche des unteren Schleuderrads 34 rotiert im Abstand 14 von der statischen Bodenplatte 5, wobei die im Spalt rotierende Flüssigkeit eine dynamische Vakuumdichtung schafft, Die Drehzahl des Rotors wird so eingestellt, dass im Verein mit den radialen Abständen der statischen Schikanen eine gewünschte Menge Flüssigkeit bei gewünschter Filmdicke 121 im Rotor entsteht.

Bild 6 zeigt den Längsschnitt entlang der Drehachse eines Rotors im Rahmen des Beispiels einer Vorrichtung, bei der das den Rotor allseitig umschliessende Gefäss 71 mehrere Funktionen übernimmt. Im oberen Bereich 74 besitzt es einen Zufluss 73, wo die Flüssigkeit entsprechend Pfeil 94 in den Rotorbereich gelangt, wobei dieser Bereich 74 für die oberen Schikanen in Form von Flügelbättern 31 auch die Funktion einer stationären Schikane zur äusseren Begrenzung des Bereichs 11 der rotierenden Flüssigkeit übernimmt. Der untere Bereich 76 des Gefässes übernimmt dieselbe Rolle für die Schikanen in Form der Flügelblätter 33 am unteren Ende des Rotors, wo das Konzentrat durch den Anschluss 73 entsprechend Pfeil 96 den Bereich des Rotors wieder verlässt. In analoger Weise übernimmt das Gefäss 71 auch in seinem mittleren Bereich 75 die Rolle eines Mantelrohrs, welches den verdampfenden Flüssigkeitsfilm entsprechend Pfeil 95 nach unten leitet und dessen Innenwand von den Wischerblättern 36 bestrichen wird. Das Gefäss 71 wird abgeschlossen durch den Bereich 77, welcher die Funktion einer stationären Endplatte hat und durch welche über die vakuumdichte Drehdichtung 78 die Welle 2 die Drehbewegung des Motors über die Scheibe 24 auf den Kranz der Haltestangen 361 der Wischerblätter 36 überträgt. Diese Wischblätter 36 können einem beliebigen Typ entsprechen, wie er in der Verfahrensgruppe der Dünnschicht- oder Kurzegverdampfer zur Anwendung kommt, d.h. sie können starr mit den Haltestangen 361 verbunden in geringem Abstand zur Mantelfläche rotieren oder in beweglicher oder flexibler Ausführung auch mit dieser Mantelfäche Kontakt nehmen. Die Haltestangen 361 haben bei dieser Vorrichtungsvariante auch noch die zusätzliche Aufgabenstellung, indem sie an ihrem unteren Ende die Schikanen 33 tragen.

Die oben entsprechend Pfeil 94 ins Gefäss 72 eintretende Flüssigkeit gelangt infolge des kleineren Durchmessers der Flügelblätter 31 im Verein mit der gewählten Drehzahl ins Innere des Rotors und fliesst unter dem Einfluss der Schwerkraft in den sich verengenden Bereich 75 des Gefässes 71, wobei sich die Dicke 12 des rotierenden Flüssigkeitsbereichs auf die Filmdicke 121 reduziert. Entsprechend Pfeil 95 fliesst der Film mit hoher Geschwindigkeit und Turbulenz in Richtung des Pfeils 95 nach unten, wo er unter dem Einfluss der grösser dimensionierten Flügelblätter 33 entsprechend Pfeil 96 das Gehäuse über den Abfluss 73 verlässt. Dabei liefert der Heizmantel 81 über die Wand des Bereichs 76 des Bereichs 75 des Gefässes 72 Wärme in die Verdampfungszone nach. Der Heizmantel 81 kann auf eine in der Verfahrenstechnik übliche Weise, z.B. über Heissdampf beheizt werden und wird vorteilhaft mit einer thermischen Isolation 83 gegen Wärmeverluste nach aussen zur umgebenden Flüssigkeit 1 geschützt.

Unten wird das Gefäss 72 stirnseitig durch die Platte 5 abgeschlossen, welche ihrerseits den Kondensatorblock 6 trägt. Ausgehend von diesem Kondensatorblock 6 ragt der innen durch ein Kühlmedium gekühlte Kondensationskörper 61 in den von den Haltestangen 361 nicht bestrichenen zentralen Innenraum des Rotors hinein. Dieser Kondensationskörper 61 ist hier symbolisch durch eine einzige Rohrschleife dargestellt, in welche das Kühlmedium entsprechend Pfeil 65 eintritt und die es entsprechend Pfeil 66 wieder verlässt. In der Realität kann es sich jedoch über mindestens einen über den Umfang verteilten Rundkranz von senkrecht verlaufenden Rohrwicklungen, wahlweise auch um mehrere konzentrisch zueinander angeordnete Rundwicklungen handeln, wobei diese auch über mehrere parallel geschaltete Kühlkreisläufe verfügen können, um die Kühlleistung zu erhöhen. Der entsprechend Pfeil 91 aus dem Flüssigkeitsfilm austretende Dampf gelangt nach kurzem radialen Weg entsprechend der üblichen Verfahrensweise der Kurzwegverdampfer-Technik in Kontakt mit dem Kondensationskörper 61, an dem er entsprechend Pfeil 97 nach unten abfliesst, wo er in einem oben durch eine zylindrische Wand 67 abgetrenntes Gefäss innerhalb des Kondensationsblocks 6 als Kondensat 15 gesammelt wird. Dieses Kondensat wird laufend über eine Leitung 63 laufend von einer Pumpe 64, z.B. einer Zahnradpumpe, entsprechend Pfeil 98 nach aussen gefördert. Anstelle von Rohrwicklungen kann als Kondensationskörper 61 z.B. auch ein innengekühlter massiver Kühlkörper mit Kühlrippen verwendet werden, wobei die Formgebung in allen Fällen so gestaltet sein muss, dass einerseits eine maximal grosse gekühlte Fläche für die Kondensation angeboten wird und andererseits dass das Kondensat zielgerichtet nach unten in das Sammelgefäss des Kondensationsblocks 61 gelangt, wobei es auf seinem Weg noch als Substrat für die Kondensation weiteren Dampfes dient.

Die Leitung 53 dient zum Absaugen der von der Flüssigkeit beim Verdampfungsvorgang freigesetzten Permanentgase, welche in der Flüssigkeit gelöst und/oder okkludiert waren. Sie gelangen über diese Leitung zu einer nicht dargestellten Vakuumpumpe mit wahlweise vorgeschaltetem Kondensator. Diese Pumpe kann z.B. bei der Verdampfung wässriger Lösungen wie z.B. Weinmost sehr klein dimensioniert werden, da die Menge der freigesetzten Permanentgase, insbesondere Stickstoff, Sauerstoff und Kohlensäure, im Vergleich zur Dampfmenge um mehrere Zehnerpotenzen geringer ist. Bei Flüssigkeiten, die keine gelösten Gase enthalten, kann eine Vakuumpumpe völlig entfallen, da der Rotor durch die von ihm freigesetzte Zentrifugalkraft ohne weiteres in der Lage ist, auch ohne Vakuumpumpe einen Hohlraum in der Flüssigkeit zu bilden, dessen Innendruck dem Dampfdruck dieser Flüssigkeit bei der herrschenden Temperatur entspricht. In einem solchen Fall wird das Dampfvolumen durch Kondensation kontinuierlich vermindert, die dadurch hervorgerufene Drucksenkung führt zu weiterer Verdampfung. In der Praxis besitzen die meisten Flüssigkeiten jedoch mehr oder weniger geringe Mengen an gelösten Permanentgasen, sodass es ohne Vakuumpumpe mit der Zeit zu einem allmählichen Druckaufbau innerhalb des Rotors kommen würde, wodurch der Verdampfungsvorgang zum Erliegen käme. Die Absaugleitung 53 mündet übrigens günstigerweise im kältesten Bereich im unteren zentralen Bereich des Kühlkörpers 61 ein, damit die Permanentgase bei ihrer Absaugung möglichst wenig Dampf mitnehmen.

Bild 7 zeigt ein weiteres Beispiel einer Vorrichtung mit innerhalb des Rotors angeordnetem Kondensator, wobei diese Vorrichtung jedoch für den Tauchvorgang in eine in einem offenen Gefäss 7 befindliche Flüssigkeit 1 vorgesehen ist. Bei diesem Rotor tritt die Flüssigkeit im unteren Bereich der Schikanen in Form von Flügelblättern 31 in den Rotor ein und gelangt dann entsprechend dem Pfeil 95 in den mittleren Bereich des Rotors, der in Form eines konisch nach oben öffnenden Mantelrohrs 321 ausgebildet ist, zu den oberen Schikanen in Form eines Schleuderrads 35 mit radialen Kanälen 351, wo sie entsprechend Pfeil 96 wieder in die umgebende Flüssigkeit 1 ausgestossen wird. Der Bereich der rotierenden Flüssigkeit 11 wird bei diesem Beispiel der Vorrichtung durch mehrere stationäre Schikanen in Form von Brernsflügeln 51 begrenzt, deren Form durch die Ausbuchtungen 511 dem Aussendurchmesser der kürzeren Flügelblätter 33 angepasst ist.

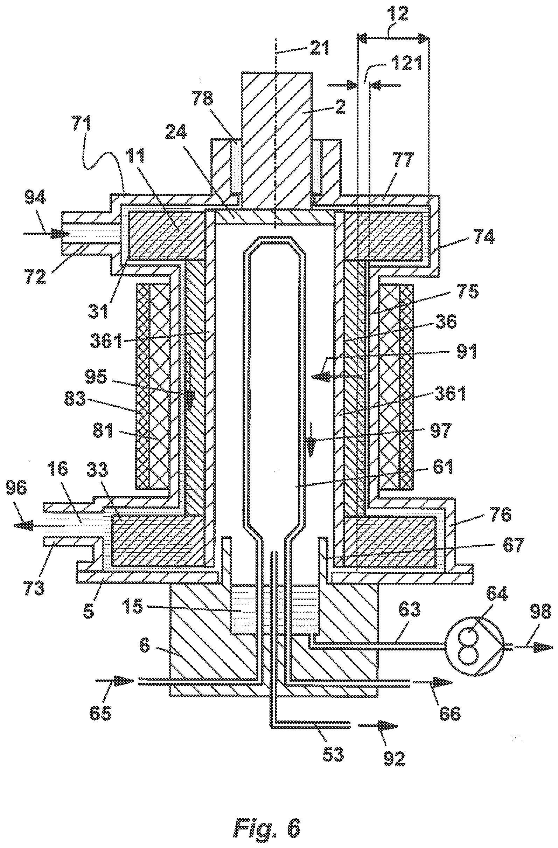

Durch den zunehmenden Durchmesser des konischen Mantelrohrs 321 kommt es zu einer zunehmenden Beschleunigung und Ausdünnung des Flüssigkeitsfilms, der unter Kochen entsprechend Pfeil 91 in effizienter Weise Dampf abscheidet. Dieser Dampf gelangt nach kurzem radialen Weg zum Kondensationskörper 61, wo er dann analog zur in Bild 6 gezeigten Vorrichtung kondensiert. Die restlichen Teile des Kondensators wie auch die zu einer kleinen Vakuumpumpe führende Saugleitung 53 haben dieselben Bezeichnungen und Funktionen wie in Fig.6, wobei sie in der Realität in einem kompakten und thermisch gegen die Flüssigkeit isolierten Bündel aus der Flüssigkeit an der Rotoraussenseite nach oben geführt werden, während sie in dieser Zeichnung aus Gründen der einfacheren Darstellung in symbolischer Weise nebeneinander dargestellt werden.

Da der Platz für die Anordnung einer Innenbeheizung im Rotor aufgrund des Kondensationskörpers 61 reduziert ist, kann für diese Vorrichtung z.B. eine Beheizung mit einer Induktionsspule 84 gewählt werden. Zu diesem Zweck muss das konische Mantelrohr 321 aus einem induzierbaren, z.B. metallischen Material bestehen und wird vorteilshafterweise, im Interesse geringer Wärmeverluste an die umliegende Flüssigkeit 1, mit einer thermisch isolierenden Schicht 83 umgeben.

Bild 8 zeigt einen Schnitt durch einen Rotor längs seiner Drehachse 21, welcher gegenüber den bisher gezeigten Vorrichtungsbeispielen eine stark erhöhte innere Verdampfungsfläche anbietet. Die Flüssigkeit tritt unten durch die rotierenden Schikanen in Form von Flügelblättern 33 und seitlich nach oben durch den scheibenförmigen Endfortsatz 322 des konischen Mantelrohrs 321 in dosierter Weise und gleichmässig über den Umfang verteilt in dessen Innenraum ein und fliesst infolge der sich nach oben öffnenden Konizität unter dem Einfluss der Zentrifugalkraft in Richtung des Pfeils 95 und unter Abgabe von Dampf entsprechend Pfeil 91 gegen die Wirkung der Schwerkraft als dünner Film beschleunigt nach oben, wobei sie auf ihrem Weg die kragenförmigen Dampfdurchlassöffnungen 323 umfliesst. Am oberen Ende des konischen Mantelrohrs 321 prallt die Flüssigkeit gegen den scheibenförmigen Endfortsatz 324, welcher die Flüssigkeit auf das mittlere konische Mantelrohr 325 umleitet. Dieses konische Mantelrohr hat eine zur Konizität des konischen Mantelrohrs 321 gegenläufige Steigung, wodurch der Flüssigkeitsfilm entsprechend Pfeil 95a nach unten fliesst, wo er von der Oberseite des Endfortsatzes 322 auf das äusserste konische Mantelrohr 326 umgelenkt wird. Die Konizität dieses Mantelrohr 326 besitzt wiederum eine in Bezug auf das mittlere Mantelrohr 325 eine gegenläufiger Steigung, sodass der Flüssigkeitsfilm entsprechend dem Pfeil 95b nun wieder gegen die Wirkung der Schwerkraft nach oben zu den Schikanen in Form von Flügelblättern 33, von denen das restliche Konzentrat wieder in die umliegende Flüssigkeit rücktransportiert wird.

Der vom Flüssigkeitsfilm freigesetzte Dampf gelangt entsprechend den Pfeilen 91, 91a und 91b zum Eingang des zentralen Absaugrohrs 52 und wird dann entsprechend den Pfeilen 92 über die aus der Flüssigkeit 1 herausführende Absaugleitung 53 dem nicht in der Zeichnung dargestellten Kondensator zugeführt.

Eine Vorrichtung gemäss Bild 8 ist im Gegensatz zu den meisten der anderen erfindungsgemässen Vorrichtungsbeispielen nur bedingt für die Behandlung stark verschmutzer und hochviskoser Flüssigkeiten geeignet, im Falle sauberer und dünnflüssiger Flüssigkeiten bietet sie jedoch ein aussergewöhnlich hohes Flächen/Volumsverhältnis für die Verdampfung an. Die Beheizung der drei rotierenden Verdampfungsebenen kann z.B. durch eine ausserhalb des Rotors angeordnete und nicht im Bild gezeigte Induktionsspule erfolgen, wobei Material und Geometrie der zylindrischen Mantelrohre 321, 325 und 326 infolge ihrer gegenseitigen Abschirmungswirkung so aufeinander abgestimmt sein müssen, dass das Induktionsfeld in möglichst gleichförmiger Weise auch noch auf das innerste Mantelrohr 321 einwirkt. Ein solches induktives Ankopplungsverhalten lässt sich z.B. durch Wahl verschiedener Werkstoffe mit abweichendem elektrischen Widerstand bzw. durch abweichende Wandstärken der Mantelrohre erzielen.

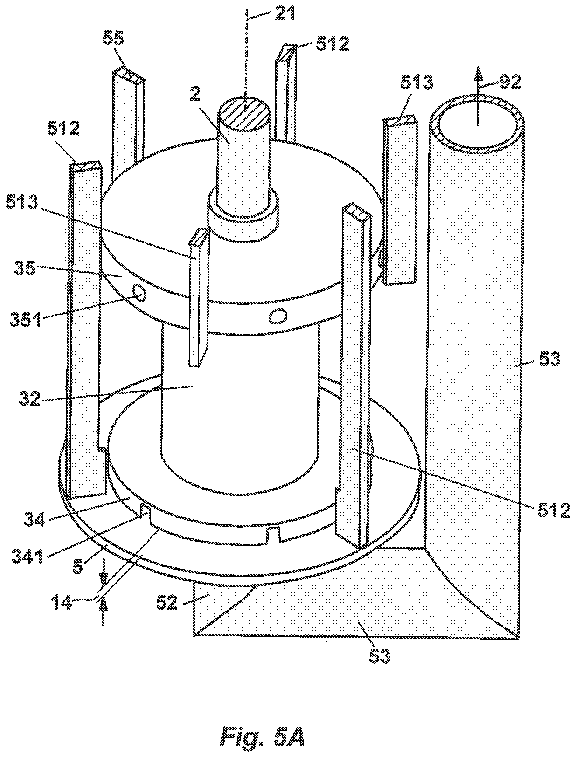

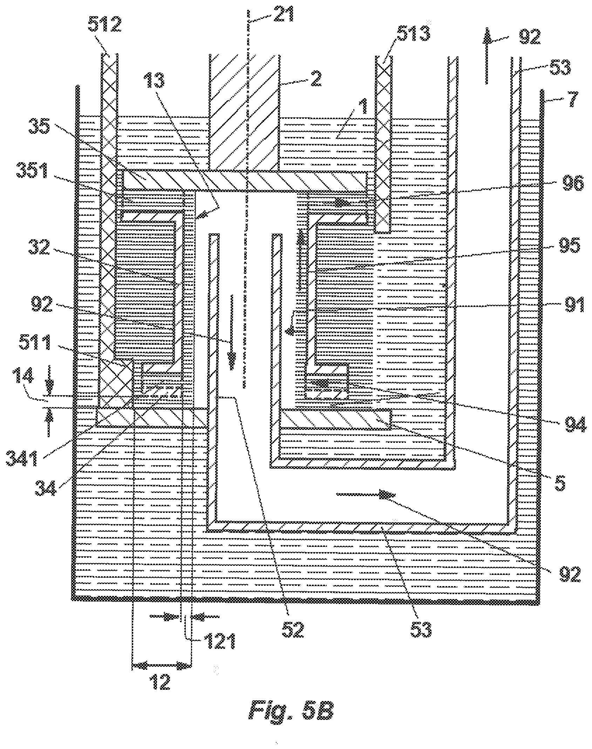

Im folgenden wird ein Beispiel der Arbeitsweise des erfindungsgemässen Verfahrens gegeben, wobei ein Versuch mit einem Rotor entsprechend der beispielhaft in Fig. 5a und 5b beschriebenen Vorrichtung durchgeführt wurde. Zweck dieses Versuches war der Aufbau eines Rotors zur Konzentration von Traubenmost zur Erhöhung des Zuckergehalts über Vakuumdestillation, um zu demonstrieren, dass die heute für diesen Zweck üblichen umfangreichen Anlagen durch einen einfachen und kompakten Rotor, der direkt in den Maischenbehälter eingetaucht werden kann, ersetzt werden können. Der Versuchsrotor wurde aus drei Teilen bestehend aus einer Aluminiumlegierung gefertigt. Diese Teile waren das obere Schleuderrad 35 in Form eins Rings mit einem Aussendurchmesser von 240 mm, einem Innendurchmesser von 120 mm sowie mit 6 über den Umfang verteilten Radialbohrungen mit 15 mm Durchmesser und das untere Schleuderrad 34 als Ring mit einem Aussendurchmesser von 235 mm, einem Innendurchmesser von 120 mm sowie auf der Unterseite mit 6 über den Umfang verteilten Radialnuten mit 10 mm Tiefe über das zylindrischen Mantelrohr 32 mit einem Aussendurchmesser von 150 und einem Innendurchmesser von 120 mm miteinander verbunden. Die drei Teile wurden zu einer Einheit zusammengeschraubt, wobei sich ein glockenförmiger Rotor mit einer zylindrischen Innenfläche von durchgehend 120 mm Durchmesser und einer Gesamthöhe von 220 mm ergab. Das obere Schleuderrad 35 wurde über ein Uebergangsteil mit der Welle 2 verbunden, die 350 mm lange Welle wurde durch das Loch einer Halteplatte in einen auf deren Oberseite montierten Lagerblock mit zwei gut dimensionierten Kugellagern geführt, welche einen guten Rundlauf des Rotors sicherten. Oberhalb des Halteblocks wurde die Welle über eine flexible Kupplung mit einem 3 kW-Asynchronmotor mit Phasenanschnittregelung verbunden, wobei die Regelung es gestattete, eine Drehzahl im Bereich von 600 - 2000 U/Min. auf +/- 2 U/Min. einzustellen und konstant zu halten. Die Drehzahl wurde mit einem laseroptischen Messgerät direkt an der Drehachse gemessen. Von dieser Halteplatte aus wurden 6 stationäre Schikanen in Form von Bremsflügeln 51 mit seitlichen Ausbuchtungen 511 im Bereich des kleineren Schleuderrads 35 nach unten geführt, sodass sie zu beiden Schleuderrädern einen Abstand von 2 mm einhielten, an ihrer unteren Stirnseite trugen diese stationären Schikanen die Bodenplatte 5 in einem Abstand von 1 mm von der unteren Stirnseite des Schleuderrads 34. Durch das Zentrum der Bodenplatte 5 ragte das zentrale Absaugrohr 52 aus rostfreiem Stahl mit einem Durchmesser von 50 mm in den Rotorinnenraum hinauf, wobei es mit seinem oberen Ende bis über den Bereich der Radialbohrungen des oberen Schleuderrads 35 reichte. Direkt unterhalb der Endplatte 5 setzte sich das Rohr 52 mit dem U-förmig gebogenen Rohr 53 fort, wobei dieses Rohr knapp oberhalb der Flüssigkeitsoberfläche durch einen 3 m langen Vakuumschlauch mit 50 mm Innendurchmesser mit einem Kondensator mit nachgeschalteter Vakuumpumpe verbunden war, der für die Zwecke dieses Versuchs von einer konventionellen Anlage entnommen wurde. Zusätzlich zu den in den Bildern 5a und 5b gezeigten Teilen wurde neben der Absaugleitung 52 auch ein isolierter Leitfähigkeitsmesskontakt sowie eine dünne Vakuumleitung durch die Endplatte 5 in den Hohlraum innerhalb des Rotors eingeführt. Die Messspitze des Leitfähigkeitskontakts wurde so positioniert, dass sie genau in dem Moment mit der Innenfläche 13 des rotierenden Flüssigkeitsbereichs 11 in Kontakt kam, wo deren Radius $r_1$ dem Wert von 45 mm entsprach, was einer Filmdicke von 15 mm entspricht. Bei Steigerung der Drehzahl kam es zu einer Erhöhung des Radius des rotierenden Flüssigkeitsbereichs 1 und damit zum Kontaktverlust, wodurch es zum Auslöschen einer Kontrollampe kam. Die zusätzliche Vakuumleitung führte zu einem Vakumeter, welches zur Kontrolle des effektiv innerhalb des Rotors im Flüssighohlraum herrschenden Drucks diente.

In einem Versuch mit Wasser wurde der mit 600 U/Min. drehende Rotor mit einem Kran langsam in ein mit 100 1 gefülltes Gefäss eingetaucht, wobei das Sperrorgan zur Vakuumpumpe noch verschlossen war. Diese Massnahme wurde getroffen, denn ohne den Einfluss der Zentrifugalkraft würde die Flüssigkeit bei stillstehendem Rotor sofort in das zentrale Saugrohr 52 eindringen, Anschliessend wurde das Sperrorgan zur Vakuumpumpe immer wieder kurz geöffnet, sodass der Druck innerhalb des Rotors absank und sodann die Drehgeschwindigkeit des Rotors langsam solange erhöht, bis die Lampe des Leitfähigkeitsmesskreises zu flackern begann, was ein Zeichen dafür war, dass die innere Mantelfläche 13 des rotierenden Flüssigkeitsbereichs 11 einen Radius $r_1$ von 45 mm besass. Dieser Vorgang wurde in Schritten wiederholt, bis man bei 50 mbar in den Bereich des Dampfdrucks des bei 30°C befindlichen Wassers gelangte. Dieser Dampfdruck stellt ohne dauernde akive Absaugung die Grenze des erreichbaren Unterdrucks dar. Anschliessend wurde aus dem jeweils gemessenen Druck und der Rotorgeometrie unter Verwendung der Formel [1] die theoretische Drehzahl ermittelt und diese mit dem aus dem Experiment ermittelten Wert entsprechend Tabelle I verglichen:

Tabelle I

| Druck mbar | Drehzahl Theorie U/Min. | Drehzahl Messung U/Min. | ΔD % |
|---|---|---|---|
| 600 | 922 | 925 | 0.33 |
| 510 | 1016 | 1012 | -0.39 |
| 470 | 1056 | 1059 | 0.28 |
| 420 | 1102 | 1129 | 2.45 |
| 70 | 1388 | 1395 | 0.50 |
| 50 | 1402 | 1412 | 0.71 |

Wie Tabelle I zeigt, stehen die gemessenen Werte sehr gut in Uebereinstimmung mit den theoretischen Werten, die Standardabweichung des Mittelwerts der Unterschiede von Theorie und Messung liegt bei +/- 0.65 %. Da bei diesem Versuch keine kontinuierliche Verdampfung stattfand, konnte aus der allmählichen Erwärmung des Wasserbads auch die mechanische Rührleistung des Rotors bei der höchsten Drehzahl von 1412 U/Min. mit 0.98 kW ermittelt werden, d.h. um diesen Wert konnte die zur Kompensation der Verdampfungswärme nötige Leistung der Heizung bei Verdampfungsversuchen reduziert werden.

Nachdem im Vorversuch die Gültigkeit der Formel [1] bestätigt worden war, wurde ein zweiter Versuch mit einer 20% Zuckerlösung durchgeführt, was in etwa der Zuckerkonzentration eines Traubenmosts entspricht. Bei diesem Versuch wurde die Lösung im Behälter mit Tauchsiedern beheizt und mittels einer Temperaturregelung auf einer konstanten Temperatur von 30°C gehalten. Der Rotor wurde wiederum am Kran hängend mit langsamer Rotation in die Zuckerlösung eingetaucht, anschliessend wurde die Drehgeschwindigkeit auf 1504 U/Min. erhöht und anschliessend das Sperrorgan zur Vakuumpumpe geöffnet. Es stellte sich innerhalb des Rotors ein Druck von 40 mbar ein, was einer Filmdicke von 5 mm im zylindrischen Hohlkörper 32 des Rotors entspricht. Sofort begann auch der Verdampfungsprozess, was sich einerseits in der Schalthäufigkeit des Heizsystems zur Beibehaltung der Temperatur wie auch durch das Erscheinen von Destillat im Kondensator zeigte. Die Verdampfungsleistung ergab sich dabei im Mittelwert zu 270 ml/Min., was hochgerechnet von der für die Verdampfung zur Verfügung stehenden Mantelfläche 13 von etwa 0.09 $m^2$ einer Leistung von 180 l/(h.$m^2$) entspricht, ein Wert, der sich mit guten Dünnschicht-verdampfern vergleichen lässt. Durch Analyse des Zuckergehalts des Destillats konnte auch nachgewiesen werden, dass keinerlei Zuckerspuren vorhanden waren, d.h. trotz der geringen Abmessungen des Rotors und der Bremswirkung des Leitfähigkeitskontakts gelangten keinerlei Spritzer der Zuckerlösung in das Absaugrohr 52.

Legende

1       Flüssigkeit
11      rotierender Bereich der Flüssigkeit
111     Stauzone vor Zinke von statischen Wischblatt
112     Unterdruckzone hinter Zinke von statischen Wischblatt
12      Dicke rotierender Bereich der Flüssigkeit

| | |
|---|---|
| 121 | Dicke rotierender Flüssigkeitsfilm innerhalb Mantelrohr |
| 13 | Oberfläche für Verdampfung/Entgasung |
| 14 | stirnseitige Spaltbreite (dynamische Flüssigkeitsdichtung) |
| 15 | Kondensat |
| 16 | Konzentrat |
| | |
| 2 | Rotorwelle |
| 21 | Drehachse |
| 22 | radialer Kanal in Rotorwelle 2 |
| 23 | zentraler Absaugkanal in Rotorwelle 2 |
| 24 | Scheibe |
| | |
| 3 | Schikane, allgemein |
| 31 | Schikane (Flügelblatt) auf Seite Wellenzuführung |
| 311 | stirnseitige Endplatte auf Seite Wellenzuführung |
| 312 | stirnseitige Endplatte |
| 32 | zylindrisches Mantelrohr |
| 321 | konisches Mantelrohr |
| 322 | Absaugkanal in Mantelrohr 321 |
| 323 | oberes Umlenkblech |
| 324 | unteres Umlenkblech |
| 325 | mittleres konisches Mantelrohr |
| 326 | äusseres konisches Mantelrohr |
| 33 | Schikane (Flügelblatt)auf Gegenseite Wellenzuführung |
| 331 | stirnseitige Endplatte auf Gegenseite Wellenzuführung |
| 34 | Schikane (Schleuderrad) auf Seite Flüssigkeitseintritt mit rad. Einfräsungen |
| 341 | Radiale Einfräsung |
| 35 | Schikane (Schleuderrad) auf Seite Flüssigkeitsaustritt mit rad. Kanälen |
| 351 | Radialer Kanal |
| 36 | rotierendes Wischblatt |
| 361 | Haltestange, rotierendes Wischblatt |
| | |
| 4 | stationäres Wischerblatt, allgemein |
| 41 | Haltestange |
| 411 | Zinke, zylindrisch |
| 412 | Zinke, dreieckig |
| 413 | Zinke, flach mit Anstellwinkel |
| | |
| 5 | untere stationäre Endplatte |
| 5a | obere stationäre Endplatte |
| 51 | stationäre Schikane (Bremsflügel) |
| 511 | Ausbuchtung statische Schikane |
| 512 | stationäre Schikane (Bremsflügel) unterer Rotorbereich |
| 513 | stationäre Schikane (Bremsflügel) oberer Rotorbereich |
| 52 | zentrales Absaugrohr |
| 53 | Weiterführung Absaugrohr zu kleiner Vakuumpumpe |
| 54 | Stationäres Mantelrohr |
| | |
| 6 | Kondensator-Block |
| 61 | Kondensator-Kühlkörper |
| 62 | Kondensatgefäss |
| 63 | Kondensat-Leitung |
| 64 | Kondensat-Pumpe |
| 65 | Zufluss Kühlmedium |
| 66 | Abfluss Kühlmedium |
| | |
| 7 | Flüssigkeitsbehälter, allgemein |
| 71 | Geschlossener Flüssigkeitsbehälter, insgesamt |

72    Anschluss Zufluss Flüssigkeit
73    Anschluss Abfluss Flüssigkeit
74    Behälterbereich um obere Flügelblätter (Funktion stationäre Schikane)
75    Behälterbereich um Wischblätter (Funktion Mantelrohr)
76    Behälterbereich um untere Flügelblätter (Funktion stationäre Schikane)
77    Behälterbereich obere Stirnseite (Funktion stationäre Stirnplatte)
78    Drehdichtung

8    Beheizung, allgemein
81    Heizmantel
82    Infrarot-Strahler
83    thermische Isolation
84    Induktionsspule

91    Pfeil, radialer Dampf-/Gasaustritt
91a    Pfeil, radialer Dampf-/Gasaustritt 2. Filmmantelfläche
91b    Pfeil, radialer Dampf-/Gasaustritt 3. Filmmantelfläche
92    Pfeil, Dampf-/Gastransport in Absaugkanal
92a    Pfeil, Dampf-/Gastransport in Zentralkanal Rotorwelle
93    Pfeil, Wirkungsrichtung Zentrifugalkraft
94    Pfeil, Eintritt Flüssigkeit in Rotor
95    Pfeil, Durchfluss verdampfende Flüssigkeit durch Rotor
95a    Pfeil, tangentiale Rotationsrichtung Flüssigkeit
951a    Pfeil, Ablenkung Stauzone vor Zinke
952a    Pfeil, Wirbelbildung
96    Pfeil, Abfluss Konzentrat
97    Pfeil, Abflussrichtung Kondensat an Kondensator
98    Pfeil, Austritt Kondensat
99    Pfeil, Aussenradius rotierender Flüssigkeitsbereich
991    Pfeil, Wirkung Aussendrücke
99a    Pfeil, Innenradius rotierender Flüssigkeitsbereich
991a    Pfeil, Wirkung Innendruck Hohlraum

## Patentansprüche

1.  Verfahren zur Verdampfung von Flüssigkeiten unter vermindertem Druck, wobei zumindest die axialen Endbereiche eines in einer Flüssigkeit befindlichen, über eine Welle (2) von einem Motor angetriebenen und an seinen Stirnseiten durch Endplatten (311 bzw. 5) gegen axialen Zustrom von Flüssigkeit abgedeckten Rotors mit mindestens zwei gleichmässig über seinen Umfang verteilten radialen, in tangentialer Richtung Strömung erzeugenden Schikanen (3), einen radial nach aussen durch eines oder mehrere stationäre und strömungsbegrenzende Elemente (51, 54) umgebenen Bereich (11) der Flüssigkeit in tangentialer Richtung in Bewegung versetzen, wobei die Schikanen über die gesamte Länge des Rotors von der im Rotationszentrum befindlichen Welle ausgehen und der Rotor in axialer Richtung an allen Stellen in einem Abstand von 0.1 mm bis zu maximal einem Drittel des lokalen Durchmessers der von den Rotorschikanen (3) bestrichenen Mantelfläche, von dem einem oder den mehreren konzentrisch zur Rotorachse angeordneten, stationären strömungsbegrenzenden Elementen (51, 54), umgeben ist, wobei die Drehzahl des Rotors so gewählt wird, dass im Innenbereich des Rotors, vom rotierenden Bereich der Flüssigkeit umgeben und stirnseitig durch die Endplatten (311;5) begrenzt, ein unter vermindertem Druck stehender zentralsymmetrischer Hohlraum mit einer für den Verdampfungsvorgang zur Verfügung stehenden Mantelfläche (13) gebildet wird, wobei der lokale Durchmesser dieser Mantelfläche und damit die Dicke (12) der den Hohlraum umgebenden rotierenden Flüssigkeitsschicht (11) durch das Gleichgewicht der durch die Masse der rotierenden Flüssigkeit erzeugten Zentrifugalkraft mit der Gegenkraft, erzeugt aus der Summe des auf die Flüssigkeit (1) von aussen einwirkenden atmosphärischen und dem durch die lokale Tauchtiefe des Rotors aufgebauten hydrostatischen Druck einerseits sowie dem im Hohlraum herrschenden Unterdruck andererseits bestimmt wird, und dass der in den Hohlraum übergetretene Dampf entweder über eine Leitung (52, 53) zu einem ausserhalb des Rotors befindlichen Kondensator beliebiger Art mit nachgeschalteter Vakuumpumpe abgeführt oder an einem innerhalb des Hohlraums befindlichen, nicht an der Rotation teilnehmenden Kondensator (61) der Art, wie sie bei Kurzwegverdampfern verwendet werden, verflüssigt, das kondensierte Destillat (15) gesammelt und anschliessend mit einer Pumpe (64) gegen den im Hohlraum herrschenden Unterdruck aus dem Hohlraum abgeführt wird, wobei der Anteil der nicht durch die Wärmeentwicklung des Rühreffekts kompensierten, aufgrund Entzugs der Verdampfungswärme entstandenen Wärmeverluste, durch ein innerhalb oder ausserhalb des Rotors auf die Flüssigkeit einwirkendes Beheizungssystem gedeckt wird.

**2.** Verfahren nach Anspruch 1, **dadurch gekennzeichnet, dass** die Rotorschikanen (3) zusätzlich in axialer Richtung Strömung erzeugen.

**3.** Verfahren nach Anspruch 1 oder 2, **dadurch gekennzeichnet, dass** die Rotorschikanen in Form von Flügelblättern (3) oder in einem zylindrischen Rohrkörper (34, 35) vorwiegend in radialer Richtung verlaufenden Kanälen (341, 351) ausgestaltet sind.

**4.** Verfahren nach einem der Ansprüche 1 bis 3, **dadurch gekennzeichnet, dass** die Rotorschikanen (3) den radial nach aussen durch das eine oder die mehreren stationären und strömungsbegrenzenden Elemente (51) umgebenen Bereich (11) der Flüssigkeit in tangentialer und gleichzeitig axialer Richtung in Bewegung versetzen.

**Claims**

**1.** Method for vaporizing a liquid under reduced pressure, wherein at least the axial end regions of a rotor, which is located in a liquid, is driven by a motor via a shaft (2), is covered at its end faces by end plates (311 and 5 respectively) against an axial incident flow of liquid, and has at least two radial baffles (3) which are evenly distributed over its circumference and generate a tangential flow, set in motion, in the tangential direction, a region (11), of the liquid, that is surrounded radially outwardly by one or more stationary and flow-bounding elements (51, 54), wherein the baffles project over the entire length of the rotor from the shaft located at the centre of rotation and the rotor is surrounded in the axial direction, at all points with a separation from 0.1 mm up to at most one-third of the local diameter of the shell surface swept by the rotor baffles (3), by the one or more stationary flow-bounding elements (51, 54) that are arranged concentrically with the rotor axis, wherein the rotational speed of the rotor is selected such that, in the interior of the rotor, surrounded by the rotating region of the liquid and bounded at the end faces by the end plates (311; 5), there is formed an axisymmetric cavity which is at reduced pressure and has a shell surface (13) available for the vaporizing process, wherein the local diameter of this shell surface and thus the thickness (12) of the rotating liquid layer (11) surrounding the cavity is determined by the equilibrium between the centrifugal force generated by the mass of the rotating liquid and the counter-force generated from the sum of the atmospheric pressure acting from outside on the liquid (1) and the hydrostatic pressure built up by the local immersion depth of the rotor on one hand, and the reduced pressure prevailing in the cavity on the other hand, and in that the vapour that has passed into the cavity is removed either via a line (52, 53) to a condenser - of any kind - which has a downstream vacuum pump and is located outside the rotor, or to a condenser (61) which is located within the cavity but does not rotate, of the type used in short-path vaporizers, is condensed, the condensed distillate (15) is collected and is subsequently removed from the cavity using a pump (64) against the reduced pressure prevailing in the cavity, wherein that fraction of the heat losses arising on account of the removal of the vaporization heat which is not compensated for by the heat produced by the stirring effect is covered by a heating system acting on the liquid either inside or outside the rotor.

**2.** Method according to Claim 1, **characterized in that** the rotor baffles (3) also produce a flow in the axial direction.

**3.** Method according to Claim 1 or 2, **characterized in that** the rotor baffles are configured in the form of paddle blades (3) or, in a cylindrical tubular body (34, 35), of predominantly radially extending ducts (341, 351).

**4.** Method according to one of Claims 1 to 3, **characterized in that** the rotor baffles (3) set the region (11) of the liquid, which is surrounded radially outwardly by the one or more stationary and flow-bounding element(s) (51), in motion in the axial as well as the tangential direction.

**Revendications**

**1.** Procédé de vaporisation de liquides sous pression réduite, dans lequel au moins les parties d'extrémité axiale d'un rotor placé dans un liquide, entraîné par un moteur par l'intermédiaire d'un arbre (2) protégé d'un écoulement axial de liquide par des plaques d'extrémité (311 ou 5) disposées sur ses côtés frontaux, présentant au moins deux chicanes radiales (3) réparties uniformément à sa périphérie et formant un écoulement dans la direction tangentielle, mettent en déplacement dans la direction tangentielle une partie (11) du liquide entourée radialement vers l'extérieur par un ou plusieurs éléments stationnaires (51, 54) délimitant l'écoulement,

les chicanes partant de l'arbre situé au centre de rotation sur toute la longueur du rotor et le rotor étant entouré axialement en tout emplacement à une distance de 0,1 mm jusqu'à au plus un tiers du diamètre local de la surface d'enveloppe balayée par les chicanes (3) du rotor par le ou les éléments stationnaires (51, 54) délimitant l'écoulement disposés concentriquement par rapport à l'axe du rotor,

la vitesse de rotation du rotor étant sélectionnée de telle sorte qu'une cavité à symétrie centrale placée sous pression réduite et présentant une surface d'enveloppe (13) disponible pour l'opération de vaporisation est formée dans la partie intérieure du rotor, entourée par la partie tournante du liquide et délimitée frontalement par les plaques d'extrémité (311; 5),

le diamètre de cette surface d'enveloppe et donc l'épaisseur (12) de la couche de liquide (11) en rotation qui entoure la cavité étant défini localement par l'équilibre entre la force centrifuge exercée sur la masse du liquide en rotation et la force de réaction formée par la somme de la pression atmosphérique qui agit de l'extérieur sur le liquide (1) et de la pression hydrostatique qui résulte de la profondeur locale d'immersion du rotor, d'une part, ainsi que par la dépression qui règne dans la cavité et

la vapeur dégagée dans la cavité étant soit évacuée par un conduit (52, 53) vers un condenseur de type quelconque situé à l'extérieur du rotor et suivi par une pompe à vide ou liquéfiée par un condenseur (61) situé à l'intérieur de la cavité, ne participant pas à la rotation et du type utilisé dans les évaporateurs flash,

le distillat condensé (15) étant recueilli et ensuite évacué hors de la cavité par une pompe (64) en opposition à la dépression qui règne dans la cavité, la fraction des pertes thermiques qui ne sont pas compensées par le dégagement de chaleur de l'effet de contact et qui résultent de l'extraction de la chaleur de vaporisation étant couverte par un système de chauffage qui agit sur le liquide depuis l'intérieur ou l'extérieur du rotor.

2. Procédé selon la revendication 1, **caractérisé en ce que** les chicanes (3) du rotor forment de plus un écoulement dans la direction axiale.

3. Procédé selon les revendications 1 ou 2, **caractérisé en ce que** les chicanes du rotor sont configurées en forme d'ailettes (3) ou de canaux (341, 351) qui s'étendent essentiellement dans la direction radiale dans un corps tubulaire (34, 35) cylindrique.

4. Procédé selon l'une des revendications 1 à 3, **caractérisé en ce que** les chicanes (3) du rotor mettent en déplacement dans la direction tangentielle simultanément dans la direction axiale la partie (11) du liquide entourée radialement vers l'extérieur par le ou les éléments stationnaires (51) délimitant l'écoulement.

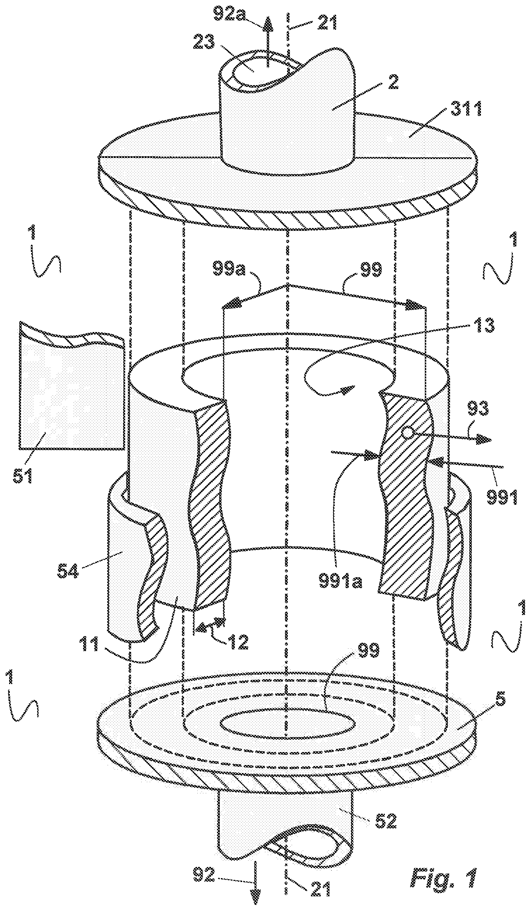

*Fig. 1*

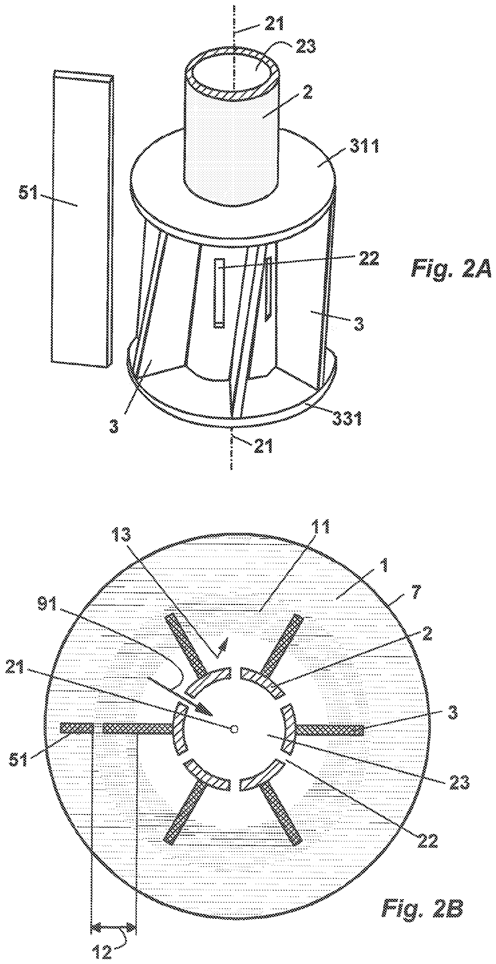

*Fig. 2A*

*Fig. 2B*

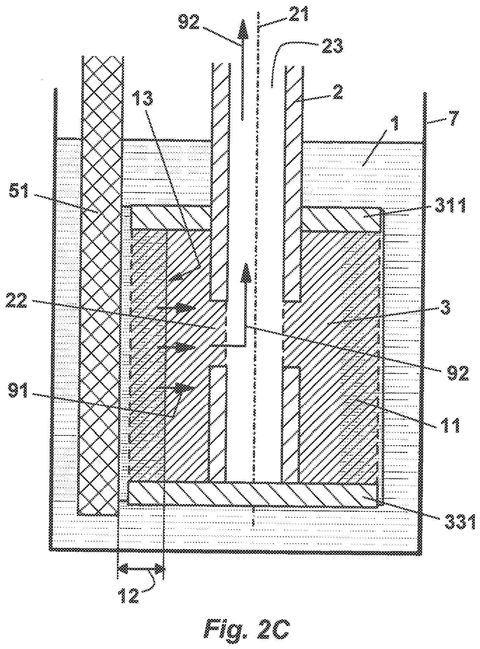

Fig. 2C

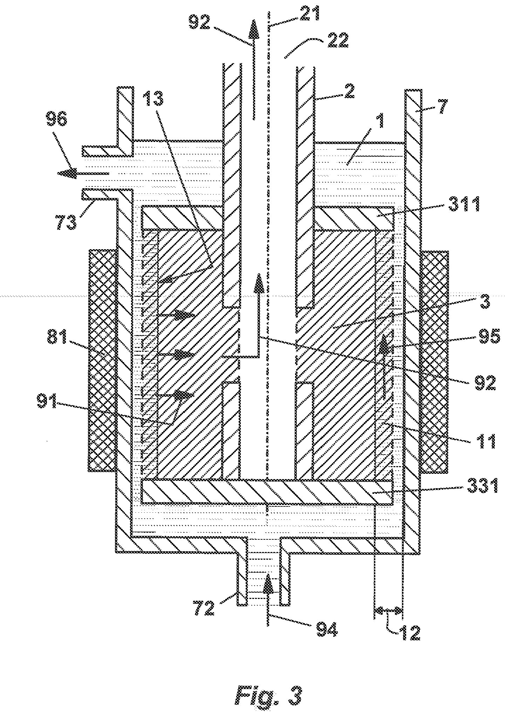

*Fig. 3*

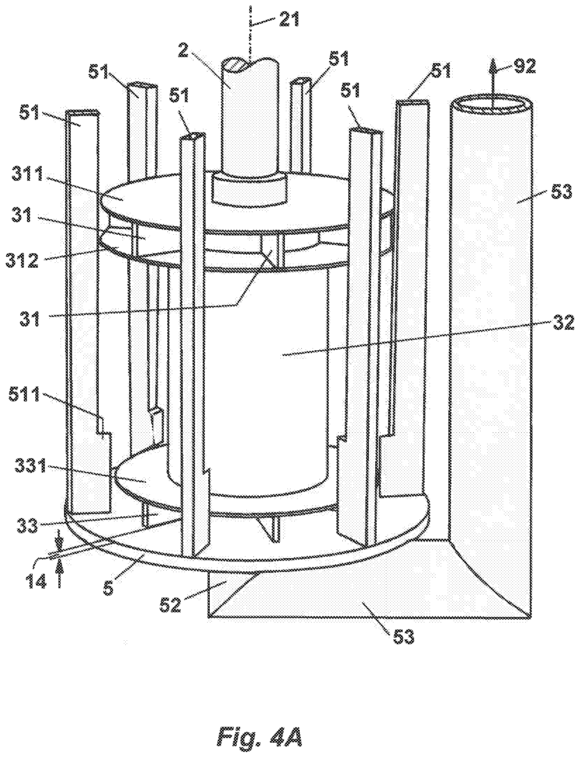

*Fig. 4A*

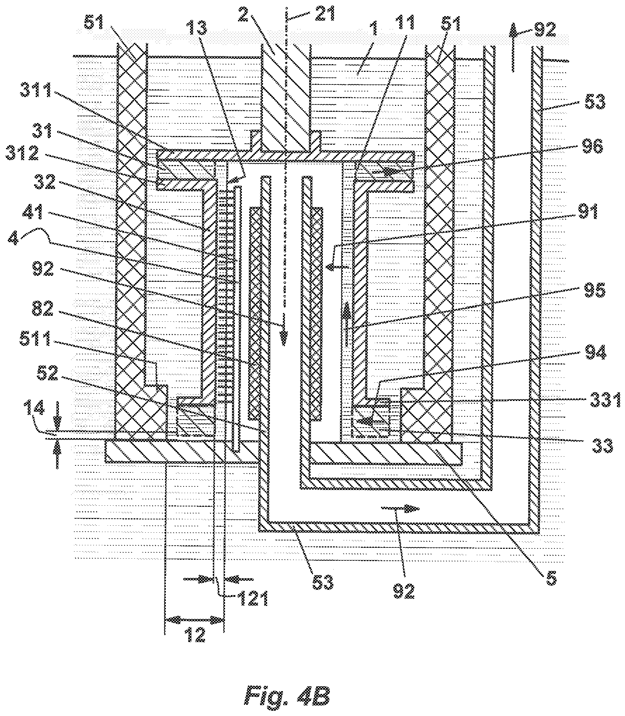

Fig. 4B

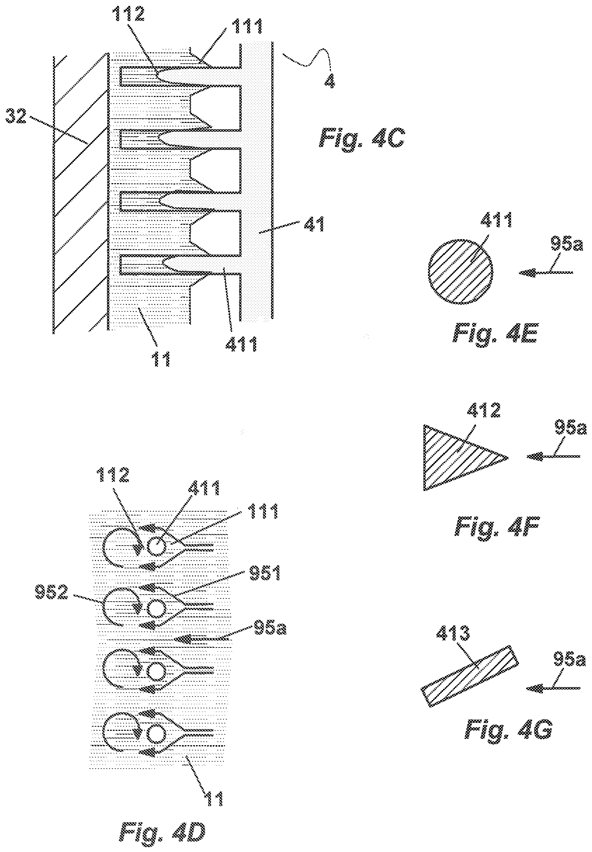

Fig. 4C

Fig. 4E

Fig. 4F

Fig. 4D

Fig. 4G

*Fig. 5A*

*Fig. 5B*

*Fig. 6*

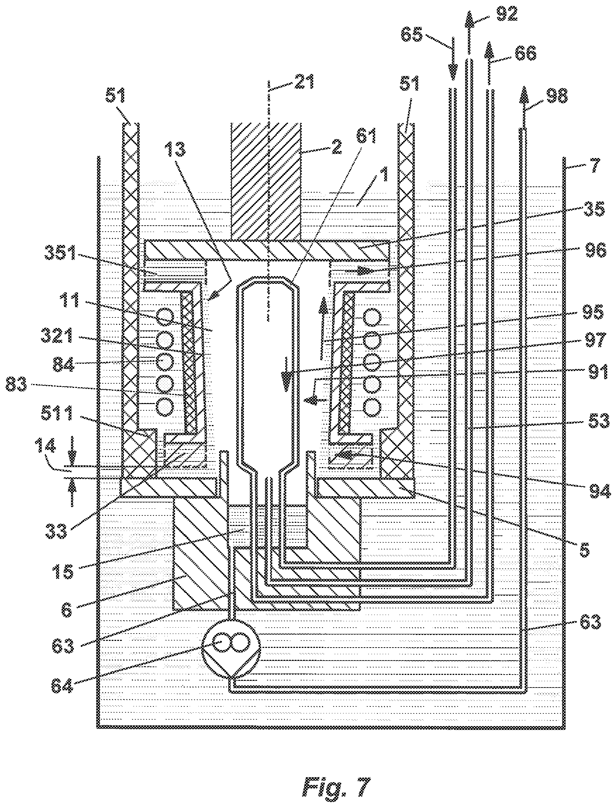

*Fig. 7*

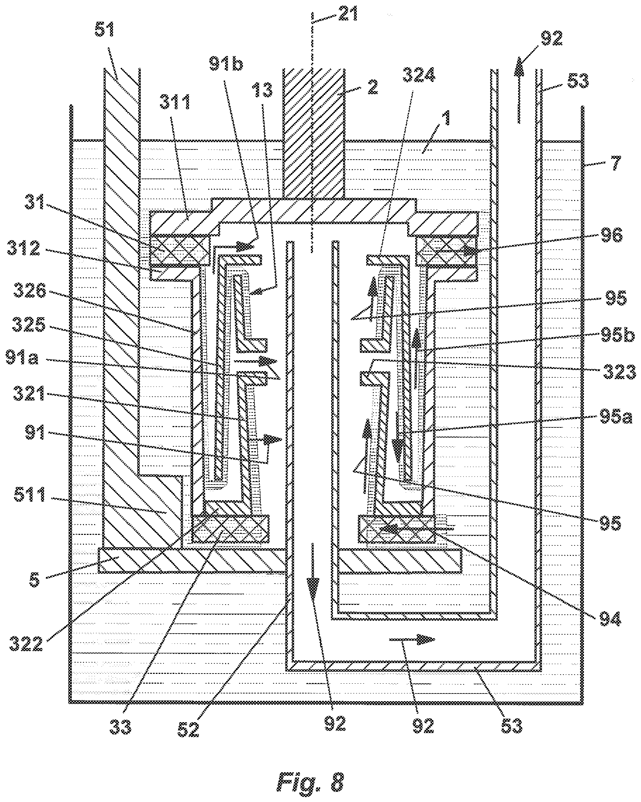

*Fig. 8*

**IN DER BESCHREIBUNG AUFGEFÜHRTE DOKUMENTE**

**In der Beschreibung aufgeführte Patentdokumente**

- US 4995945 A

- DE 401444 C

**In der Beschreibung aufgeführte Nicht-Patentliteratur**

- Praxiswissen der chemischen Verfahrenstechnik. **CHRISTE, DANIEL S.** Handbuch für Chemlker und Verfahrensingenieure. Springer, 2004